Europäisches Patentamt

European Patent Office

Office européen des brevets

(11) Publication number: **0 107 373 B1**

# EUROPEAN PATENT SPECIFICATION

(45) Date of publication of patent specification: **13.03.91**    (51) Int. Cl.⁵: **G01C 19/64**, G02B 6/28

(21) Application number: **83305763.1**

(22) Date of filing: **27.09.83**

(54) **Fibre optic gyroscope.**

(30) Priority: 28.09.82 JP 168903/82
30.09.82 JP 169518/82
30.09.82 JP 172016/82
30.09.82 JP 172017/82
30.09.82 JP 172156/82
30.09.82 JP 172169/82
29.10.82 JP 190395/82
11.11.82 JP 198058/82
14.01.83 JP 4409/83

(43) Date of publication of application:
02.05.84 Bulletin 84/18

(45) Publication of the grant of the patent:
13.03.91 Bulletin 91/11

(84) Designated Contracting States:
**DE FR GB IT**

(56) References cited:
**GB-A- 2 046 470**
**US-A- 4 213 677**

**Applied Optics, vol 21, no 19, October 82, pages 3484-3488, Matsuda Iwama: "Single mode fiber-optic directional coupler"**

(73) Proprietor: **FUJITSU LIMITED**
**1015, Kamikodanaka Nakahara-ku**
**Kawasaki-shi Kanagawa 211(JP)**

(72) Inventor: **Masuda, Shigefumi**
**14-19 Tachibanadai 1-chome Midori-ku**
**Yokohama-shi Kanagawa 227(JP)**
Inventor: **Iwama, Takeo**
**Satsuki-so 3 1-4-44, Kamishinjo Nakahara-ku**
**Kawasaki-shi Kanagawa 211(JP)**
Inventor: **Okamoto, Akira**
**3-1-1-402, Takiyama**
**Higashikurume-shi Tokyo 203(JP)**

(74) Representative: **Rackham, Stephen Neil et al**
**GILL JENNINGS & EVERY 53-64 Chancery Lane**
**London WC2A 1HN(GB)**

## Description

The present invention relates to a fibre optic gyroscope or gyro for use in detecting the movement and hence position of airplanes, and space vehicles, for example.

Known in the art is a fibre optic gyro utilising the Sagnac effect. In this gyro a laser beam from a laser diode is fed in both directions around a fibre optic coil and the change in its phase caused by rotation of the coil is monitored to indicate the rotation of the coil. Light from the laser diode is fed through a beam splitter to a polarisation plate. Light having a specific polarisation plane emerges from the polarisation plate and enters an optical fibre directional coupler. This couples the light to and from the fibre optic coil.

The degree of coupling in the optical-fibre directional coupler, however, depends greatly on the orientation of the polarisation plane of a light beam. The optical fibre directional coupler must therefore be designed in accordance with the polarisation plate used so as to ensure the optimum degree of coupling.

Even with a specially designed optical-fibre directional coupler, the optimum degree of coupling may not be obtained since polarisation plane of a light may also be rotated by terrestrial magnetism. One way of avoiding this rotation, is to convert the light to a circular polarisation state light by a depolariser or circular polariser. The polarisation plate, depolariser and other components required to improve the performance of conventional fibre optic gyros increase their size and complexity.

Also known in the art is a fibre optic gyro using a Rochon prism. A Rochon prism, however, is not always appropriate for resolution and synthesis of polarised light between input and output optical fibres and to increase the efficiency of coupling with the prism a special optical fibre is required. Also end faces of the Rochon prism and of the optical fibres are usually normal to the optical path. Therefore, some incident light is reflected and returns to the light source which causes interference. Ordinarily, this return loss is about 14 dB per end face. Even if a non-reflective coating is applied, the return loss is only reduced to about 25dB. Of course, the greater the number of the reflecting faces in the optical path, the greater the return loss. Therefore, when using a Rochon prism, it is impossible to control the return loss to a sufficiently low level.

The customarily used optical fibre has a circular section. Therefore, the formation of differently polarised components caused by micro-bends or convexities and concavities on the boundary face of the core cannot be avoided. These differently polarised components are provided by return light reflected on a reflecting face having a large return loss, resulting in cross talk. In the conventional system, since the return loss is large, it is impossible to reduce sufficiently the cross talk loss.

As means for holding an optical fibre, there is known a method in which an optical fibre is held in a V-shaped groove extending in a certain direction, which is formed on a silicon substrate by etching. In the conventional system, since it is impossible to make both the output light beams parallel to the input light beam it is not possible to use a V-shaped groove formed on a silicon substrate for holding the optical fibre. This also complicates the structure and increases the size of the apparatus.

According to this invention fibre optic gyro including a laser diode, a light detector, a coiled optical fibre, and an optical coupler arranged to couple light from the laser diode to the coil to pass in opposite directions around the coil and to couple light passing in both directions around the coil to the light detector, and a first optical fibre having one end arranged to receive light from the laser diode and carry it to its other end, characterised in that the gyro also includes a second optical fibre having its one end aligned with the other end of the first optical fibre and having its other end coupled to the light detector, and in that the optical coupler comprises a half mirror located between the other end of the first optical fibre and the one end of the second optical fibre, a first ball lens located between the other end of the first optical fibre and the half mirror, and a second ball lens located between the half mirror and the one end of the second optical fibre, ends of the coiled optical fibre facing the first and second ball lenses, and being aligned with each other and being parallel to the other end of the first optical fibre and the one end of the second optical fibre, the arrangement being such that a light beam from the laser diode is directed via the first optical fibre onto the half mirror through the first lens, the light beam is split into two by the half mirror with one part being reflected from the half mirror being directed onto one end of the coiled optical fibre through the first lens, and the other part being transmitted through the half mirror and being directed onto the other end of the coiled optical fibre through the second lens so that the light beams are propagated through the coiled optical fibre in opposite directions; after passage around the coiled optical fibre in opposite directions the light beams are synthesised by part of the light beam leaving the end being transmitted through the half mirror whilst part of the light beam leaving the end is reflected from the half mirror to impinge on the one end of the second optical fibre through which the synthesised beam is coupled to the light detector, the output of the light detector enabling the speed of rotation of the coiled optical fibre to be derived.

Various embodiments of fibre optic gyroscopes in accordance with this invention will now be described and contrasted with the prior art with reference to the accompanying drawings; in which:-

Figure 1 is a diagram of a conventional fibre-optic gryo;

Figure 2 is a diagram of a first embodiment of the present invention;

Figure 3 is a diagram of an optical fibre directional coupler used in the present invention;

Figures 4A and 4B are diagrams of the effects of the gryo in the present invention;

Figures 5A and 5B(a) to (c) are a diagram of an experimental apparatus including the fibre optic gyro of the present invention and time graphs illustrating its operation;

Figure 6 is a graph of an example of detection of the rotational speed;

Figure 7 is a graph showing the linearity and symmetry of the sensitivity of the fibre optical gyro;

Figures 8A and 8B are graphs of the experimental results;

Figure 9 is a diagram of a second embodiment with parts omitted;

Figure 10 is a diagram of an optical directional coupler used in the second embodiment with parts omitted;

Figure 11 is a diagram of a half mirror used in the second embodiment;

Figure 12 is a diagram of the second embodiment;

Figure 13 is a diagram of a third embodiment of the fibre-optic gyro according to the present invention;

Figures 14(a) to (e) are graphs showing the polarisation states of light at parts of the third embodiment;

Figure 15 is a series of timing graphs showing the operations in the third embodiment;

Figure 16 is a diagram showing the movement of the half mirror in the third embodiment;

Figures 17 and 18 are both diagrams of modifications of the third embodiment;

Figure 19 is a diagram of the fourth embodiment;

Figures 20(a) to (e) are graphs showing the polarisation states at parts in the fourth embodiment;

Figure 21 is a diagram of a modification of the fourth embodiment;

Figure 22 is a diagram of a larger scale of part of Figures 19 and 21;

Figure 23 is a diagram of the structure a preferred laser diode for use in the present invention;

Figures 24A and 24B are graphs illustrating the results of experiments made by using the laser diode structure shown in Figure 23;

Figure 25 is a graph showing the relationship between the length of the single-mode fibre and the transmission loss;

Figure 26 is a diagram of a preferred light source portion for use in the present invention;

Figure 27 is a diagram of another preferred light source portion for use in the present invention;

Figure 28 are cross sections through two examples of conventional polarisation plane storing optical fibres;

Figure 29A is a cross section through a preferred polarisation plane storing optical fibre for use in the present invention;

Figure 29B is a block diagram of an apparatus for measuring the characteristics of the preferred polarisation plane storing fibre; and,

Figure 29C is a graph showing the polarisation plane storing characteristics of the preferred fibre.

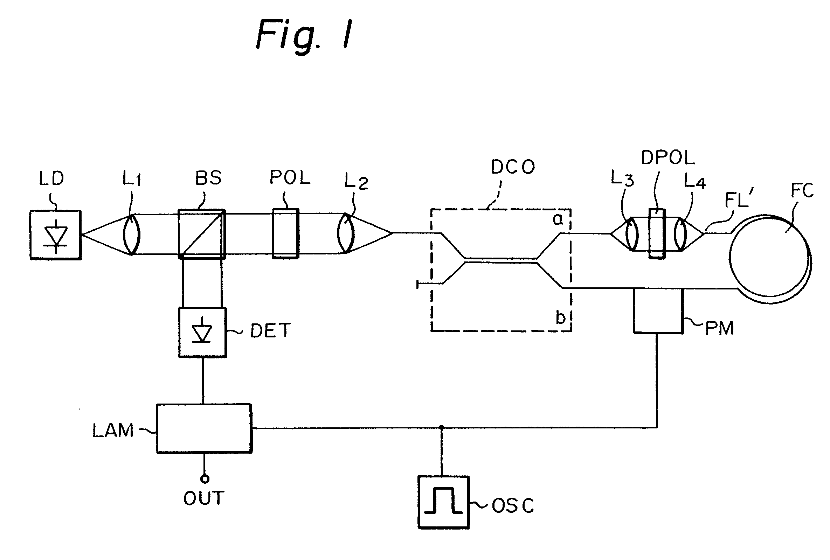

Before describing the preferred embodiments, an explanation will be given of a conventional fibre optic gyro using the Sagnac effect. As shown in Figure 1, in this gyroscope, a laser beam from a laser diode LD is applied to a polarisation plate POL through a beam splitter BS. Only the light having a specific polarisation plane emerges from the polarisation plate to strike an optical fibre directional coupler DCO.

The optical fibre directional coupler DCO divides the incident laser beam by 3dB and causes the divided beams to emerge on points a and b . The light beams from the points a and b are fed into opposite ends of an optical fibre coil FC. The laser beams transmitted through the optical fibre coil FC in directions opposite to each other are incident on the optical fibre directional coupler DCO, synthesised there, and incident on the polarisation plate POL.

Only a light having a specific polarisation plane emerges from the polariation plate POL again to strike the beam splitter BS and be reflected therefrom. The reflected laser beam is incident on a light detector DET.

An electric signal from the light detector DET is input in a lock-in amplifier LAM where the gate is opened to effect amplification only when the light returns from the optical fibre coil FC, whereby the signal to noise (S/N) ratio is improved.

The light beams transmitted through the optical fibre in a clockwise direction and a counterclockwise direction, respectively, are phase shifted by the Sagnac effect when the optical fibre coil FC is rotated and these beams may be expressed as $\cos(\omega t + \theta)$ and $\cos(\omega t - \theta)$, respectively, where $\theta$ is the angle through which the coil has been rotated during transit of the light.

When these two laser beams are synthesized, that is combined, the detected intensity of the combined laser beam is proportional to cos $\theta$.

cos ($\omega$t + $\theta$) + cos ($\omega$t - $\theta$)

= 2 cos $\omega$t.cos$\theta$

Accordingly, if the value of cos $\theta$ is found, the speed of the rotation of the coil FC can be determined.

However, in this case, the direction of rotation cannot be determined since the sign of the value of cos $\theta$ is the same for ±$\theta$ irrespective of the direction of rotation of the coil FC.

Accordingly, to overcome this problem, a light modulator PM is included downstream of the output b of the directional coupler DCO and upstream of the coil FC and this induces a phase shift. The phase of the light transmitted in the counterclockwise direction through the coil FC is shifted by $\pi$ in the light modulator PM.

Therefore, the light transmitted in the counter-clockwise direction is expressed as cos ($\omega$t - $\theta$ + $\pi$) and the detected intensity of the combined light is proportional to sin $\theta$.

cos($\omega$t + $\theta$) + cos($\omega$t - $\theta$ + $\pi$)

= -2 sin $\omega$t sin $\theta$

The value of sin$\theta$ is positive or negative with "O" as its centre when $\theta$ is zero, and hence, the direction of rotation of the coil FC can be determined.

Since the coupling degree in the optical fibre directional coupler depends greatly on orientation of the plane of polarisation it is necessary to design the optical fibre directional coupler in accordance with the polarisatiom plate POL so that optimum coupling can be obtained. Even with a specially designed optical fibre directional coupler, the optimum drgree of coupling may not be obtained because of the rotation of the polarisation plane of the light which returns from the optical fibre coil FC due to terrestrial magnetism. Accordingly, to overcome this difficulty a depolariser DPOL is included downstream from the output a of the directional coupler DCO and upstream of an input FL' to the coil FC. In the depolariser DPOL the light is converted to circularly polarised light. This overcomes the problems caused by terrestrial magnetism.

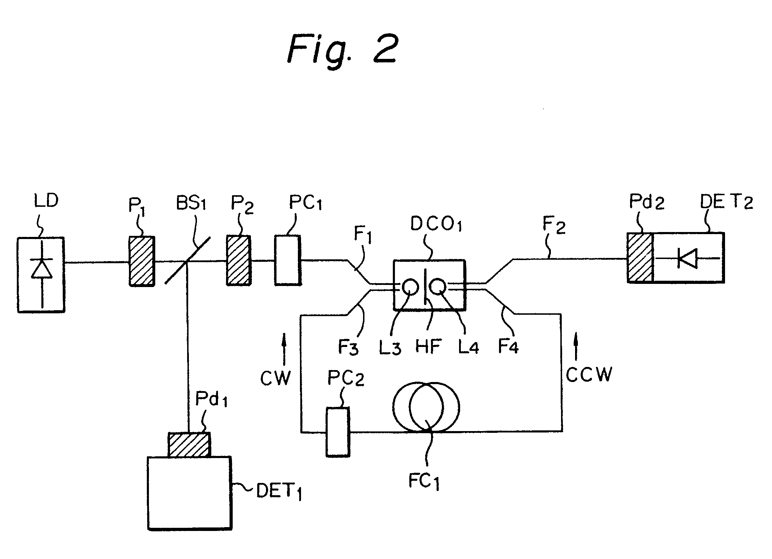

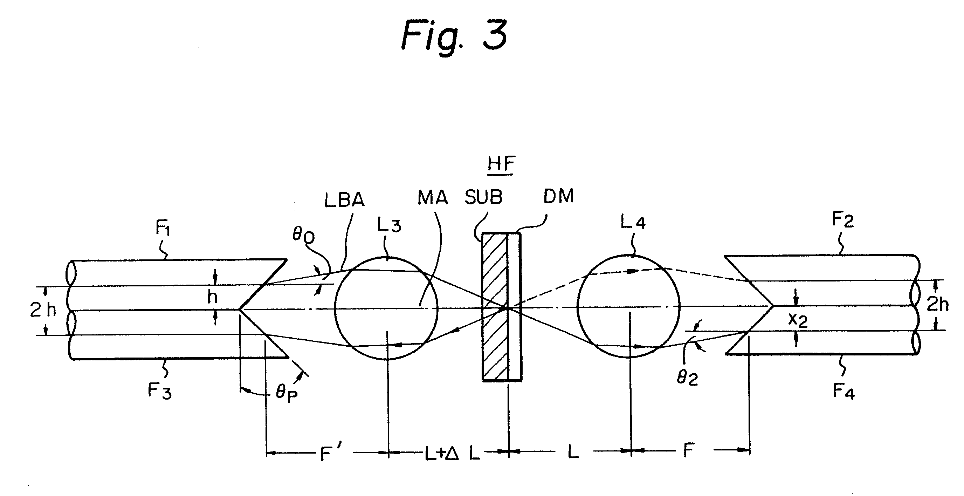

Figures 2 and 3 show an embodiment of the present invention and an optical fibre directional coupler used in the present invention. In Figures 2 and 3, the same members as shown in Figure 1 are represented by the same symbols. P1 and P2 represent polarisers, PC1 and PC2 control portions for the polarisation plane, Pd1 and Pd2 polarised-light separating prisms, DET1 and DET2 light detectors, L3 and L4 are ball lenses, DCO1 an optical fibre directional coupler, FC1 an optical fibre coil, and HF a half mirror.

In the present invention, in order to shift the phase of the light transmitted in the counterclockwise direction CCW by "$\pi$" without using a light modulator, the lenses L3 and L4 of the optical fiber directional coupler DCO1 are formed by using a crystal having a single-axis characteristic, such as sapphire.

The control portions PC1 and PC2 for the polarization plane are formed to effect fine adjustment of the quantity of this phase shift. The polarization plane is rotated in these control portions.

More specifically, the optical fiber is twisted in the control portions PC1 and PC2.

The operation of the fiber-optic gyro shown in Fig. 2 will now be outlined.

Referring to Fig. 2, the optical fiber directional coupler DCO1 has a structure in which four single-mode fibers are coupled by two ball lenses L3 and L4 and the half mirror HF is inserted between the lenses L3 and L4.

A linearly polarized beam from the laser diode LD (single mode) is provided from the optical fiber F1 of the optical fiber directional coupler DCO1 to be incident on the half mirror HF through the ball lens L3.

In the half mirror HF, the incident light is divided into reflected light and transmitted light. The reflected light passes through the ball lens L3 again and is incident on the end face F3 of the optical fiber coil FC1. The tranmsited light passes through the ball lens L4 and is incident on the end face F4 of the optical fiber coil FC1.

The light is transmitted through the optical fiber coil FC1 in the clockwise direction CW and the counterclockwise direction CCW undergoes phase shifts ±$\phi$ proportional to the rotation angle speed $\Omega$ of the optical fiber coil FC1, respectively. The phase shift $\phi$ is expressed by formula (1) according to the Sagnac equation:

$$\pm\phi = \pm\left|2\pi R \ell \cdot \Omega / (\lambda c)\right| \qquad \ldots\ldots (1)$$

wherein R represents the radius of the coil, $\ell$ stands for the fiber length, c stands for the speed of the light in vacuum, and $\lambda$ represents the wavelength of the light wave in vacuum.

In the above formula, signs " + " and "-" correspond to phase deviations of the beam transmitted in the counterclockwise direction CCW and the beam transmitted clockwise direction CW, respectively. These two beams are synthesized in the half mirror HF and divided again as described above. One beam is returned

4

to the optical fiber F1 and is incident on the light detector DET1 through the beam splitter. The other beam is incident on the optical fiber F2 and guided to the light detector DET2.

The optical fiber directional coupler DCO1 will now be described with reference to Fig. 3. The structure of this directional coupler was published by us in an article entitled "Single-Mode Fiber-Optic Directional Coupler" in Journal of Applied Optics, Vol. 21, No. 19, October 1982 at pages 3484-3488.

Ordinarily, in a directional coupler, when reflected lights leaking from the optical surfaces of the lens, fiber, or a half mirror, or returning light couples with the optical fiber again, light phase noise is generated. Accordingly, in the directional coupler shown in Fig. 3, the optical axis LBA is separated from the mechanical axis MA and tilted therefrom. The end face of the optical fiber has a tilt angle $\theta p$ with respect to the mechanical axis.

In this optical fiber directional coupler DCO1, the distance F' between the lens $L_3$ and fibre and the distance L between the lens $L_4$ and half mirror HF are changed so that an optimum coupling efficiency can be obtained among the four fibers. For example, when the structural parameters of the four fibers are the same, the optimum coupling efficiency can be obtained if the following equations (2) and (3) are established, and adjustment can be made so that these conditions are satisfied:

$$\theta_0 = \theta_2 = (L - F)/h/F \qquad \ldots\ldots (2)$$
$$x_2 = -h \qquad \ldots\ldots (3)$$

wherein F stands for the focal distance of the lens, $\theta_0$ stands for the emergent angle, $\theta_2$ stands for the incident angle, and $x_2$ and h represent half values of the distance between the centers of the fiber cores.

The light waves transmitted in the optical fiber directional coupler DCO in the two directions are substantially limited to those satisfying the conditions of equations (2) and (3). Accordingly, the light path in DCO1 and the light-incident position to the half mirror are fixed. Almost no deviation of the optical path is caused between the light waves propagated in the two directions. In Fig. 3, SUB denotes a substrate and DM denotes a multilayer dielectric film.

The condition for providing a $\pi/2$ light phase bias between light waves CCW and CW in the fiber gyroscope shown in Fig. 2 and the quantity of the light phase noise produced at this time will now be clarified.

Assuming that a linear polarized light wave is used as the light source, the electric field is expressed by the following equation according to the complex vector system:

$$\mathbb{E} = (\exp(-i\omega t)) \begin{pmatrix} \mathbb{E}_{ox} \cdot e^{i\phi x} \\ 0 \end{pmatrix} \qquad \ldots\ldots (4)$$

wherein $\mathbb{E}_{ox}$ stands for the amplitude of the light, $\omega$ stands for the angular speed of the light wave, and $\phi x$ designates the phase of the light wave.

In the optical fiber directional coupler shown in Fig. 3, in the case where a lens formed of a monoaxial crystal such as sapphire is used, a phase deviation 20k of the light wave is caused between normal light and abnormal light. Assuming that the angle between the axis of the incident light wave and the crystal axis is $\alpha_K$ the light wave passing through this lens undergoes a phase shift $(T_k)$ represented by the following equation:

$$(T_k) = \begin{array}{l} e^{i\theta_K} \cos^2 \alpha_K + e^{-i\theta_K} \sin^2 \alpha_K \, , \\[6pt] -2i \sin \theta_K \sin \alpha_K \cos \alpha_K \, , \\[6pt] -2i \sin \theta_K \sin \alpha_K \cos \alpha_K \\[6pt] e^{i\theta_K} \sin^2 \alpha_K + e^{-i\theta_K} \cos^2 \alpha_K \end{array} \qquad \ldots\ldots (5)$$

where K is 1, 2, or 3, in the case of K = 1, the value between F1 and HF in lens 3 is indicated, in the case of K = 2, the value between F4 and PM in lens 4 is indicated, and in the case of K = 3, the value between F3 and HF in lens L3 is indicated.

In an ordinary single-mode fiber, propagation of the light wave leads to rotation of the polarization plane thereof, and, simultaneously, conversion of the light wave to oval polarized light. However, the fiber can be twisted to return it to linear polarized light again. If this fact is taken into consideration, the change $(T_F)$ of the light wave propagated through the coil can be expressed by the following equation by using the rotation $\alpha_F$ of the polarization plane:

$$(T_F) = \begin{pmatrix} \cos \alpha_F & - \sin \alpha_F \\ \sin \alpha_F & \cos \alpha_F \end{pmatrix} \qquad \ldots \ldots (6)$$

In the case of a linearly polarized wave store fiber, a relation of $\alpha_F \equiv 0$ is established in equation (6). However, equation (6) is established if the incident or emergent end face (F3 or F4 in Fig. 2) of the fiber coil FC to the lens L3 or L4 is rotated by $\alpha_F$.

In the first place, the case where the polarizer P2 (see Fig. 2) is not provided is examined. The light wave from the fiber coil FC is incident on the light detector DET1 through the half mirror HF. Electric field vectors $|E_{ccw}$ and $|E_{ccw}$ of the light waves CCW and CW are expressed as follows by using the equations (1), (4), (5), and (6):

$$|E_{CCW} =$$

$$\frac{1}{\sqrt{2}} (T_1)^t (T_2)^t (T_F)(T_3)^t (T_1)$$

$$\cdot \begin{pmatrix} E_{ox} \cdot \cos\beta \\ E_{ox} \cdot \sin\beta \end{pmatrix} e^{i\phi} \qquad \ldots \ldots (7)$$

$$|E_{CW} =$$

$$\frac{1}{\sqrt{2}} (T_1)^t (T_3)(T_F)^t (T_2)(T_1)$$

$$\cdot \begin{pmatrix} E_{ox} \cdot \cos\beta \\ E_{ox} \cdot \sin\beta \end{pmatrix} e^{-i\phi} \qquad \ldots \ldots (8)$$

Incidentally, the following relation is established.

$$E_{ox} = E_{ox} e^{-i(\omega t - \phi x)} \qquad \ldots \ldots (9)$$

In equation (4), the angle of rotation of the polarization plane caused by rotation or twisting of the fiber F1 at the point where the linear polarized light wave is incident on the lens L3 from the fiber F1 is designated as $\beta$.

From equation (5), the following equation is derived:

$$(T_K) = (T_K)^t \qquad \ldots \ldots (10)$$
$$\text{wherein K is 1, 2, or 3.}$$

Accordingly, the electric field $|E$ formed by synthesis of the beams CCW and CW is expressed as follows:

$$|E_T = |E_{CCW} + |E_{CW} \cdot e \qquad \ldots \ldots (11)$$

This $|E$ can be expressed by the following simple equation by using equations (1) and (4) through (11):

$$\mathbb{E}_T = \frac{1}{\sqrt{2}} \begin{pmatrix} (f_1\cos\beta + f_2\sin\beta)e^{i\phi} \\ + (f_1\cos\beta - f_2^*\sin\beta)e^{-i\phi} \\ (f_1^*\sin\beta - f_2^*\cos\beta)e^{i\phi} \\ + (f_1^*\sin\beta + f_2\cos\beta)e^{-i\phi} \end{pmatrix} \mathbb{E}_{ox} \qquad \cdots\cdots (12)$$

Incidentally, $f_1$ and $f_2$ in the above equation are represented as follows:

$$\begin{pmatrix} f_1 f_2 \\ f_3 f_4 \end{pmatrix} = (T_1)^t (T_2)^t (T)_F (T_3)^t (T_1) \qquad \cdots\cdots (13)$$

It is proved from equation (13) that the following relations are established:

$$f_4 = f_1^* \qquad \cdots\cdots (14)$$
$$f_3 = -f_2^* \qquad \cdots\cdots (15)$$

The electric output $I_2$ obtained when $|E_T$ is incident on the light detector DET1 is given by the following equation by using equation (12) in the case where an X-polarized light wave is taken out:

$$I_{1x} = \left\langle \left| \mathbb{E}_{TX} \right|^2 \right\rangle$$
$$= \frac{1}{2} \{ \left| f_1\cos\beta + f_2\sin\beta \right|^2 + \left| f_1\cos\beta - f_2^*\sin\beta \right|^2 + (f_1\cos\beta + f_2\sin\beta)(f_1\cos\beta - f_2^*\sin\beta)^* e^{2i\phi} + (f_1\cos\beta + f_2\sin\beta)^*(f_1\cos\beta - f_2^*\sin\beta)e^{-2i\phi} \}$$
$$\cdot \left| \mathbb{E}_{ox} \right|^2 \qquad \cdots\cdots (16)$$

Each of $f_1$ and $f_2$ is a function of $\alpha_F$, and the complex amplitude thereof is changed according to $\alpha_F$. Similarly, by changing $\beta$, the complex amplitude of each element of $(f1\cos\beta + f2\sin\beta)$ of equation (16) can be changed. Thus, the phase difference component $\Delta\phi x$ can be adjusted by adjusting $\alpha_F$ or $\beta$. By using equation (12), the above component in the polarization direction X is expressed as follows:

$$\Delta\phi x = \arg(f_1\cos\beta + f_2\sin\beta) - \arg(f_1\cos\beta - f_2^*\sin\beta)$$
$$= \pm \frac{\pi}{2} \qquad \cdots\cdots (17)$$

This $\Delta\phi x$ indicates an optical light phase bias condition.

7

By using equation (12), the electric output $I_{iv}$ obtained in DET1 by the light wave polarized in the direction y is similarly expressed by an equation similar to equation (16). Furthermore, by adjusting $\alpha_F$ or $\beta$ with respect to the light wave polarized in the direction y, the phase difference component $\Delta\phi y$ can be adjusted to an optimum value, as indicated by the following formula (18) similar to equation (17):

$$\Delta\phi y = \arg(f_1^* \sin\beta - f_2\cos\beta)$$
$$-\arg(f_1^*\sin\beta + f_2\cos\beta)$$
$$= \overset{-}{+} \frac{\pi}{2} \qquad \qquad \dots\dots (18)$$

Incidentally, in equation (16), the absolute value of the term multiplied by $e^{2i\phi}$ is equal to the absolute value value of the term multiplied by $e^{-2i\phi}$. This is also true with respect to $I_{iv}$. Accordingly, the following relations are established in the detection outputs $I_{ix}$ and $I_{iy}$ of the fiber optic gyro:

$$I_{1x} \quad \text{is proportional to} \quad \overset{+}{-} \sin 2\phi \qquad \qquad \dots\dots (19)$$

and

$$I_{1y} \quad \text{is proportional to} \quad \overset{-}{+} \sin 2\phi \qquad \qquad \dots\dots (20)$$

As is apparent from equations (17) and (18), there are present values of $\alpha_F$ and $\beta$ simultaneously satisfying the conditions of equations (17) and (18). In this case, in Fig. 2, insertion of the polarizer P2 is not allowed. Instead, a polarized light separating prism Pd1 is inserted just before the light detector DET1, whereby $I_{ix}$ and $I_{iy}$ can be taken out as the detection outputs.

When $I_{ix}$ and $I_{iy}$ are simultaneously used, similar phase noises can be removed. Incidentally, leakage due to imperfections of the polarized light separating prism Pd1 results in reduction of the electric output, not increase of phase noises.

In the case where a simpler optical system is used, the polarizer P2 is inserted, and one of $I_{1x}$ or $I_{1y}$ is taken out. It has been reported that in this case, the light phase noise of the fiber-optic gyro can be controlled to a minimum level. In the fiber-optic gyro proposed in the present invention, as is apparent from equations (16) through (20), the light phase noise can theoretically be reduced to zero.

The foregoing illustration has been made with reference to the light wave output from the light detector DET1. However, according to substantially similar procedures, the output $I_2$ of the light detector DET2 can be determined. In this case, tendencies similar to those described above are observed also with respect to $I_{2x}$ and $I_{2y}$, but the light phase noise cannot be reduced to zero.

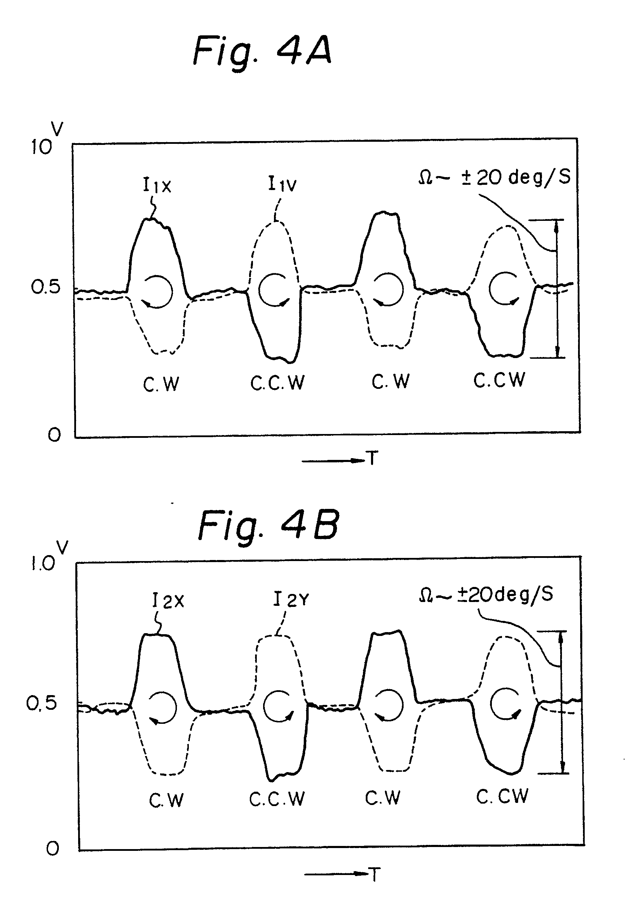

The results of experiments made by using the fiber optical gyro shown in Fig. 2 are shown in Figs. 4A and 4B. In the structure shown in Fig. 2, the polarizer P1 is inserted, and the voltage of the light detector DET1 is read by a voltage meter and recovered by an X-T recorder. The obtained results are shown in Fig. 4A. Waveforms $I_x$ and $I_y$ of output voltages of Pd1 shown in Fig. 2 are shown in Fig. 4B, which are obtained in experiments where the polarizer P2 is inserted. In Figs. 4A and 4B, the abscissa indicates the time T and the ordinate the output voltage V. CW indicates the results obtained when rotation in the clockwise direction is detected, and CCW indicates the results obtained when rotation in the counterclockwise direction is detected.

From the foregoing results, it is confirmed that the relations of equations (11) and (20) are established substantially simultaneously. By making such adjustment as twisting of the fiber by PC1 and PC2 shown in Fig. 2 at this time, $\beta$ and $\alpha_F$ are changed and the phase bias of the light wave can be adjusted to an optimum value, $\pm\pi/2$. Accordingly, it also is clarified that equations (17) and (18) can simultaneously be established. Since it is generally considered that a fiber-optic gyro can be realized if one of equations (19) and (20) is established, it is believed that the above results are satisfactory.

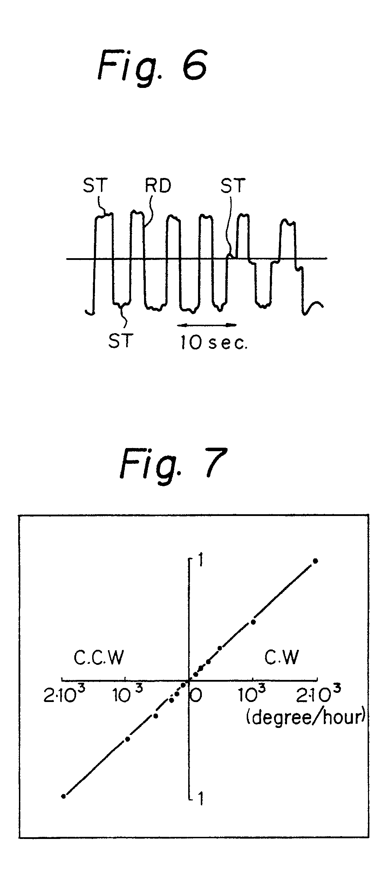

The results of experiments where, in a circuit shown in 5A, by using the optical system shown in Fig. 2, the laser diode is pulse-modulated and synchronous detection is carried out are, by using the optical system shown in Fig 2 in a circuit as shown in 5A are shown in Figs 6,7 and 8.

In Fig. 5A, FGS represents the fiber-optic gyro system shown in Fig. 2, FG stands for a pulse generator, LA represents a lock-in amplifier, and SW represents a switch.

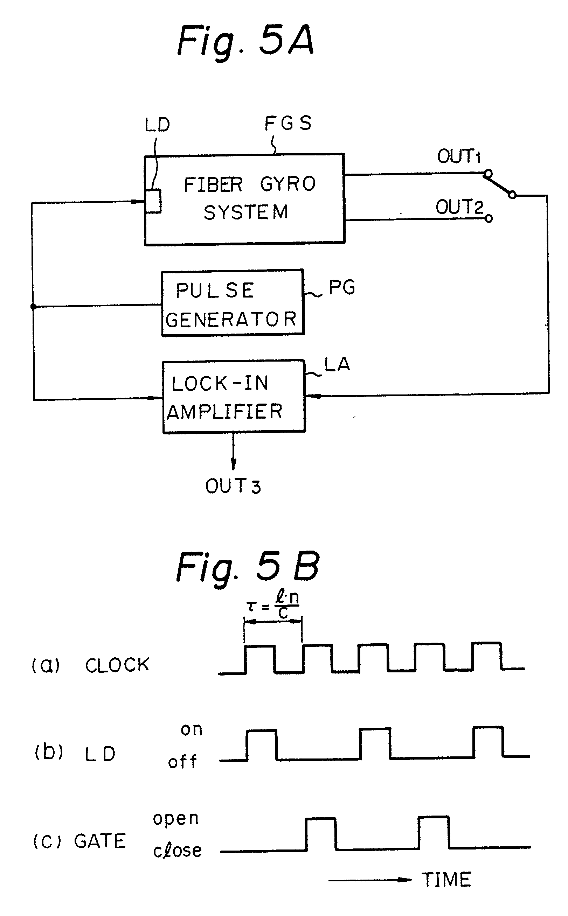

A clock shown in Fig. 5B-(a) is output from the pulse generator PG. A clock shown in Fig. 5B-(b) is input in the laser diode LD. A clock shown in Fig. 5B-(c) is input in the lock-in amplifier LA.

The frequency $\tau$ of the clock of Fig.5B(a) is determined by the relation of $\tau = \ell \cdot n/c$ in which $\ell$ stands

for the length of the fiber coil, n stands for refractive index of the fiber core, and c stands for the speed of light in vacuum.

The value of $\tau$ indicates the time required for the laser beam from the laser diode to pass through the fiber coil and be guided to the light detector DET1 or DET2. By closing the gate of the lock-in amplifier before the incidence of the light on the light detector, the noise component contained in the output OUT3 of the lock-in amplifier LA is removed.

The measurement results are now described. Figure 6 illustrates results obtained when the fiber-optic gyro is placed on a rotary table and a rotation angle speed of ±500°/hour is given to the gyro. In Fig. 6, ST represents the output obtained when the rotation is stopped, and RD stands for the output obtained when the rotation is initiated.

Figure 7 is a diagram of the linearity of the sensitivity of the fiber-optic gyro. In Fig. 7, the abscissa indicates the rotation angle speed (degree/-hour) and the ordinate indicates the output voltage V. The region on the right side of the axis Y is the region where the gyro is rotated in the clockwise direction CW. The region on the left side of the axis Y is the region where the gyro is rotated in the counterclockwise direction CWC. As is apparent from Fig. 7, the results obtained with respect to rotations in both the directions are symmetric. Good linearity is attained.

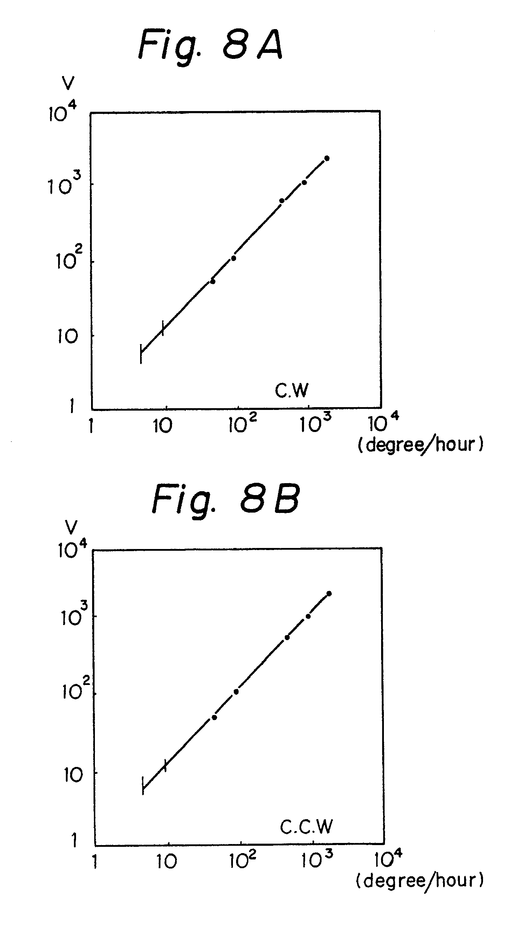

Figures 8A and 8B show results obtained when the range of the rotation angle speed is broadened. The measurement is possible in the range of from 5 to 2000°/hour. Good linearity is attained. Figure 8A shows the results obtained when the gyro is rotated in the clockwise direction CW, and Fig. 8B shows the results obtained when the gyro is rotated in the counterclockwise direction CCW.

In the foregoing experiments, a semiconductor laser VSB (1.3 $\mu$m wavelength) is used and a fiber coil of $\ell$ = 360 m and R = 7 cm is used. The results shown in Figs. 6 through 8B are those obtained without stabilization or temperature control of the laser diode, high frequency overlapping, or using a light isolator or polarizer P1, P2, Pd1 or Pd2. When the experiments are similarly performed by using 0.78 $\mu$m band laser diode (BCS-LD) as the light source, substantially similar results can be obtained.

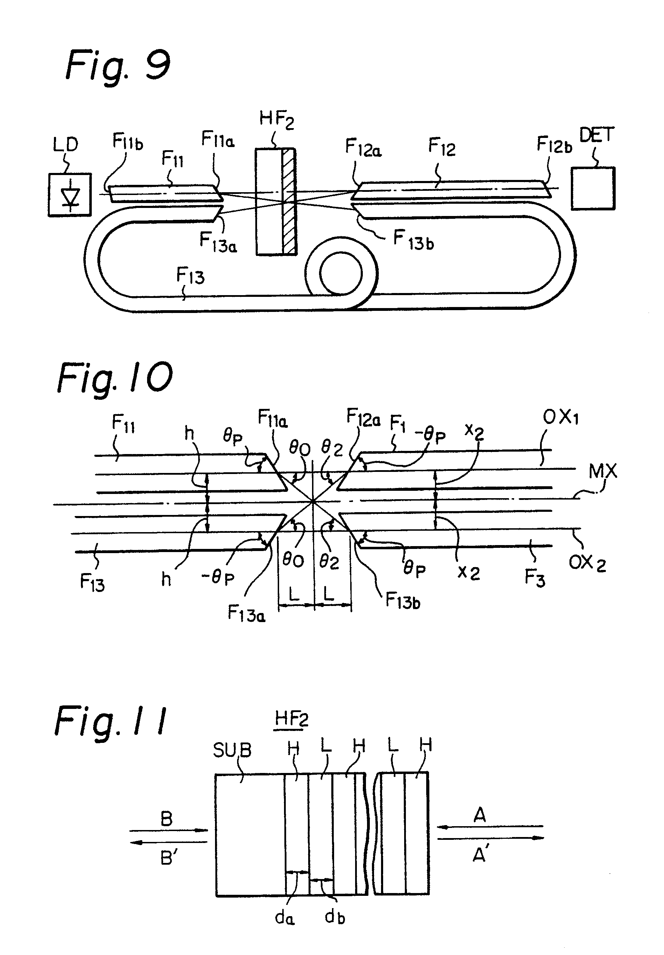

Figure 9 is a diagram of an arrangement of optical fibres used in a second embodiment of the present invention. In Figs 9, $F_{11}$, $F_{12}$ and $F_{13}$ represent single-mode optical fibers for maintaining a single polarisation and $HF_2$ represents a half mirror. The same members as shown in Fig. 1D are represented as the same reference numerals. The optical fibers $F_{11}$ and $F_{12}$ are arranged with the half mirror $HF_2$ interposed therebetween so that the optical axes of the optical fibers $F_{11}$ and $F_{12}$ extend along the same line.

The fiber $F_{13}$ forms an optical fiber loop. Both the ends of the fiber $F_{13}$ are arranged in parallel to the optical fibers $F_{11}$ and $F_{12}$.

The optical fibers have a polarization-plane storing property, and the polarization plane of an incident laser beam is stored and emerges.

The end faces $F_{11}a$, $F_{12}a$, $F_{13}a$, and $F_{13b}$ of the optical fibers $F_{11}$, $F_{12}$ and $F_{13}$ are tilted by a certain angle, as shown in detail in Fig. 10.

The half mirror $HF_2$ comprises an optical substrate SUB and multilayer dielectric films H and L formed on the surface thereof as shown in Fig. 11.

The end faces $F_{11b}$ and $F_{12b}$ of the optical fibers $F_{11}$ and $F_{12}$ are inclined at the Brewster angle to the laser diode LD and light detector DET.

In the present invention, the structure shown in Fig. 10 provides an optical directional coupler. A phase difference of $\pi$ is given by the half mirror shown in Fig. 11 to laser beams propagated through the optical fiber loop in directions opposite to each other.

The tilt angle will now be described in detail with reference to Fig. 10. The tilt angle of the end faces $F_{11a}$ and $F_{13b}$ of the optical fibers to the optical axes OX1 and OX2 is expressed as $\theta p$, and the tilt angle of the end faces $F_{12a}$ and $F_{13a}$ to the optical axes OX1 and OX2 is expressed as $-\theta p$. The incident or emergent angle of light to the optical axis is expressed as $\theta o$, and the length between the incident or emergent point and the half mirror is expressed as L. Assuming that the distance between the optical axes of the optical fibers $F_{11}$ and $F_{13}$ and the mechanical axis MX (passing through the light reflecting point of the half mirror $HF_2$) is h, the incident angle $\theta 2$ and the distance x2 between the optical axes of the optical fibers $F_{12}$ and $F_{13}$ and the mechanical axis (passing through the light reflecting point of the half mirror HF) are expressed by the ray matrix according to the following equation:

$$\begin{pmatrix} x_2 \\ \theta_2 \end{pmatrix} = \begin{pmatrix} 1 & L \\ 0 & 1 \end{pmatrix}\begin{pmatrix} 1 & L \\ 0 & 1 \end{pmatrix}\begin{pmatrix} h \\ \theta_0 \end{pmatrix}$$

$$= \begin{pmatrix} 1 & 2L \\ 0 & 1 \end{pmatrix}\begin{pmatrix} h \\ \theta_0 \end{pmatrix}$$

Accordingly, the following relations are established:

$$x_2 = h + 2L \cdot \theta_0$$
$$\theta_2 = \theta_0$$

In order to establish the relation of $x_2 = -h$, h is made equal to $L \cdot \theta_0$ ($h = L \cdot \theta_0$).

Accordingly, if optical fibers have end faces polished according to the above equations, the incident and emergent angles are made equal to each other and optimum coupling can be obtained.

The reason for occurrence of the phase difference $\pi$ will now be described with reference to Fig. 11. The multilayer film is formed by alternately laminating a layer H of a material having a large refractive index (such as $TiO_2$) and a layer L of a material having a small refractive index (such as $SiO_2$). The thickness of each layer is adjusted to about 1/4 of the wavelength of the laser beam used.

The outermost layer is the layer H of a material having a large refractive index.

Assuming that the refractive index of the layer H is $n_a$ and the refractive index of the layer L is $n_b$, the ray matrix of this half mirror is calculated according to the following equation:

$$\begin{pmatrix} M_{11} & JM_{12} \\ JM_{21} & M_{22} \end{pmatrix} = \begin{pmatrix} \cos\phi & J/n_a \sin\phi \\ Jn_a \sin\phi & \cos\phi \end{pmatrix}\begin{pmatrix} \cos\phi & J/n_b \sin\phi \\ Jn_b \sin\phi & \cos\phi \end{pmatrix}$$

$$\cdots\cdots \begin{pmatrix} \cos\phi & J/n_a \sin\phi \\ Jn_a \sin\phi & \cos\phi \end{pmatrix}$$

wherein $\phi$ is equal to $\lambda \cdot 2\pi\delta/\lambda_0$, $\lambda_0$ represents the central wavelength ($\lambda_0/4 = n_a d_a$ or $n_b d_b$) of the half mirror at the time of design, $\delta$ indicates the degree of deviation of the wavelength at the time of use from the wavelength at the time of design, which is in the range of from 1.25 to 0.8, and the relation of $M_{11} = M_{22} = M$ is established.

Accordingly, the electric field $E_0$ and magnetic field $H_0$ of the laser beam within the half mirror are expressed as follows:

$$\begin{pmatrix} E_0 \\ H_0 \end{pmatrix} = \begin{pmatrix} M & JM_{12} \\ JM_{21} & M \end{pmatrix}\begin{pmatrix} 1 \\ n_s \end{pmatrix}$$

wherein $n_s$ stands for the refractive index of the optical substrate.
Ordinarily, the reflectance 1R on a film is expressed as follows:

$$1R = \left| \frac{E_0 - H_0/n_0}{E_0 + H_0/n_0} \right|^2$$

wherein $n_0$ stands for the refractive index of the film.

Accordingly, amplitudes and phases of the light incident on the half mirror in the direction of arrow A and reflected in the direction of arrow A' and the light incident on the half mirror in the direction of arrow B and reflected in the direction of arrow B' are expressed as follows:

$$\underset{A\to A'}{1R} = \left(\frac{M^2(n_s - n_0)^2 + (M_{12}n_0n_s - M_{21})^2}{M^2(n_s + n_0)^2 + (M_{12}n_0n_3 + M_{21})^2}\right)\left|e^{J\theta_1}\right|^2$$

$$\underset{B\to B'}{IR} = \left(\frac{M^2(n_s - n_0)^2 + (M_{12}n_0n_s - M_{21})^2}{M^2(n_s + n_0)^2 + (M_{12}n_0n_s + M_{21})^2}\right)\left|e^{J\theta_2}\right|^2$$

From the above equations, $\theta_1$ and $\theta_2$ are calculated as follows:

$$\theta_2 = \frac{M_{12}n_0n_s - M_{21}}{\sqrt{M^2(n_s - n_0)^2 + (M_{12}n_0n_s - M_{21})^2}}$$

$$- \frac{M_{12}n_0n_s + M_{21}}{\sqrt{M^2(n_s + n_0)^2 + (M_{12}n_0n_s + M_{21})^2}}$$

$$\theta_1 = \frac{-(M_{12}n_0n_s - M_{21})}{\sqrt{M^2(n_0 - n_s)^2 + (M_{12}n_0n_s - M_{21})^2}}$$

$$- \frac{M_{12}n_0n_s + M_{21}}{\sqrt{M^2(n_s + n_0)^2 + (M_{12}n_0n_s + M_{21})^2}}$$

In the above equations, the second terms are equal to each other. The first terms are different only in sign. The absolute values are equal to each other. Accordingly, it is seen that if light is incident on the multilayer film substantially vertically thereto, the amplitudes are equal and phases deviate only by $\pi$. In contrast, the phase of the light transmitted through the half mirror is not influenced at all. Light is not always reflected in the thickness center of the multilayer half mirror. The effective thickness deviation at light reflection produce the optical phase difference of $\lambda/4$, between the transmission and reflection light of counterclockwise and clockwise direction from the fiber coil.

The above feature will now be described with reference to Fig. 9. The light reflected on the half mirror HF is light propagated in the optical fibre $F_{13}$ in the counterclockwise direction. THe light transmitted through the half mirror $HF_2$ is light propagated in the optical fibre $F_{13}$ in the clockwise direction. Accordingly, at the point of incidence on the optical fibre $F_{12}$, a phase deviation of $\lambda/4 + \theta$ is produced, where light phase shift $\theta$ is produced by Sagnac effect.

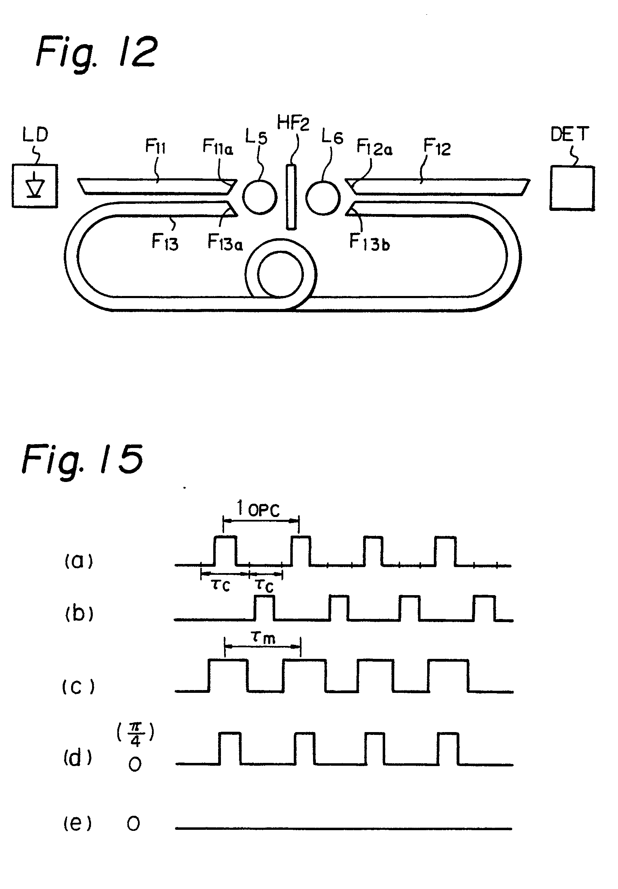

In the second embodiment which is illustrated in Figure 12, ball lenses L6 and L5 are additionally arranged in the structure shown in Figure 9. In this embodiment, inclinations of the end faces $F_{11a}$, $F_{12a}$, $F_{13a}$, and $F_{13b}$ are reverse to those in Figure 9. The tilt angles and other factors in this embodiment are described in detail in the thesis entitled "Single-Mode Fiber Optical Directional Coupler" published in the "Journal of Applied Optics", Vol. 21, No. 19, of 1 October 1982, pages 3484 to 3488. Accordingly, a detailed explanation is omitted here.

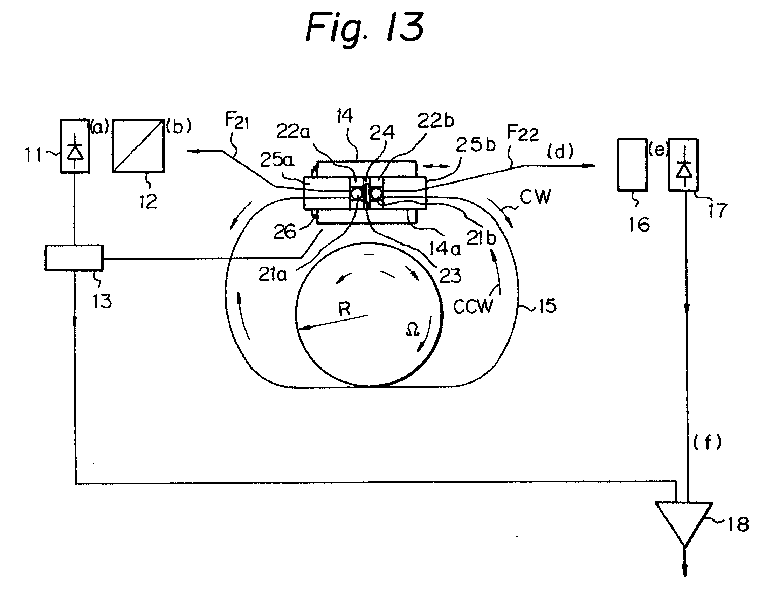

Figure 13 is a diagram of a third embodiment of the present invention. In Fig. 13 reference numeral 11 represents a laser diode, 12 represents a Glan-Thomson prism, 13 an oscillator, 14 an electrostriction element, 15 a fixed polarization fiber, 16 a phase plate, 17 a light detector, and 18 a phase detector. In the electrostriction element 14, there are disposed ball lenses 21a and 21b, lens holders 22a and 22b, a half mirror 23, a space 24 producing λ/4 modulation, plugs 25a and 25b, and optical fibers $F_{21}$ and $F_{22}$.

In the system shown in Fig. 13, one end of the optical fiber $F_{21}$ and one end of the fixed single polarization maintaining single-mode optical fiber 15 are inserted in the plug 25a. The ball lens 21a is held by the lens holder 22a to confront the end faces of both the optical fibers. The half mirror 23 is secured to the lens holder 22a. One end of the optical fiber $F_{22}$ and the other end of the fixed polarization optical fiber 15 are inserted in the plug 25b. The ball lens 21b is held by the lens holder 22b to confront the end faces of both the optical fibers. The plugs 25a and 25b are inserted in a through hole 14a formed in the piezoelectric effect ceramic element or electrostriction element 14. The plug 25a is secured to the electrostriction element 14 by an adhesive 26.

Light emitted from the laser diode 11 passes through the Glan-Thomson prism 12 and is converted to a linearly polarized light. The polarized light is converged by the ball lens 2l and branched into two beams by the half mirror 23. One beam passes through the half mirror 23 and is propagated through an optical fiber loop having a radius R in the form of clockwise light CW passing through the ball lens 21b and arriving at the fixed polarization optical fiber 15. The other light is reflected on the half mirror 23 and is guided to the fixed polarization optical fiber 15 in the form of counterclockwise light CCW. The clockwise and counterclockwise signals are phase-shifted by the phase plate 16, detected by the light detector 17, and output through the phase detector 18.

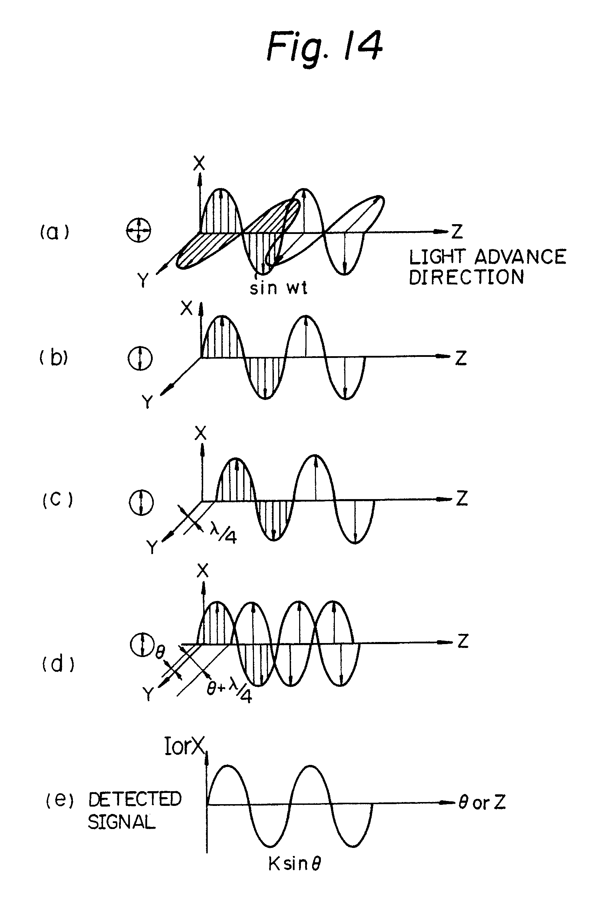

Polarization states of the signal at points (a), (b), (c), (d), (e), and (f) are shown by corresponding signals in Figs. 14-(c) to (e). Fig 14, (a) shows light emitted from the laser diode, (b) shows light linearly polarized in the Glan-Thomson prism 12 and light propagated in the fixed polarization optical fiber in the clockwise direction, (c) shows light propagated in the fixed polarization optical fiber in the counterclockwise direction, and (d) shows light propagated in the optical fiber $F_{22}$. Incidentally, the angle $\theta$ shown in Fig. 14(d) is represented by the following equation:

$$\theta = \frac{2\pi LR \cdot \Omega}{\lambda C}$$

wherein L stands for the entire length of the fixed polarization optical fiber coil, R stands for the radius of the coil, $\Omega$ stands for the rotation angle speed (radian/sec) of the fiber, $\lambda$ stands for the wavelength of light, and C stands for the speed of light in vacuum.

The signal (d) having a difference of angle $2\theta + \lambda/4$ is obtained by the phase plate Babinet compensator 16, with linear polarization as shown in Fig. 14-(e), and input in the light detector 17. Fig. 14-(e) also shows the output signal of the light detector 17. This signal is phase-detected by the phase detector 18 and is output from the phase detector 18.

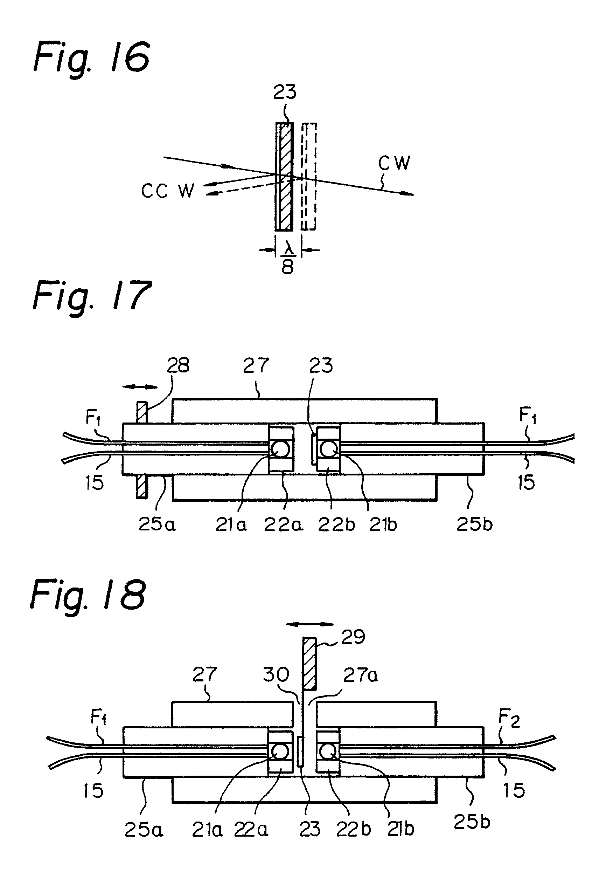

The sequential relationship among the output light of the laser diode 11, the modulation output of the electrostriction element 14, and the light signals propagated in the fixed polarization optical fiber 15 in the clockwise and counterclockwise directions will now be described with reference to Figs. 15 and 16.

The laser diode 11 is driven at a timing shown in Fig. 15-(a) by the output of the modulator 13. Namely, the light emission time interval $t_{opc}$ is larger than the time $\tau_c$ required for light to pass through the optical fiber loop 15. In this embodiment shown in the drawings, $t_{opc}$ is two times as long as $\tau_c$. Incidentally, $\tau_c$ is expressed by the following equation:

$\tau_c = L \cdot n/C$

wherein L stands for the entire length of the optical fiber coil, n stands for the refractive index of the core, and C stands for the speed of light in vacuum.

The electrostriction element 14 is modulated at a timing shown in Fig. 15-(c). The timing $\tau_m$ is equal to $t_{opc}$. This modulation time is longer than the modulation time of the laser diode 11.

Since the plug 25a is shifted by modulation of the electrostriction element 14, the half mirror is shifted from the solid line position to the dotted line position as shown in Fig. 16. The shifting distance is λ/8. By this shift, the reflection point at the half mirror 23 is deviated by λ/8 in connection with the signal CCW propagated in the fixed polarization optical fiber 15 in the counterclockwise direction. The light CW propagated in the fixed polarization optical fiber 15 in the clockwise direction is not influenced by the above-mentioned shift.

Accordingly, when the lights CCW and CW are incident on the fixed polarization optical fiber 15, a phase difference of λ/4 is produced between the beams CCW and CW. This state is shown in Figs. 15-(d) and 15-(e), (d) indicating the light CCW and (e) indicating the light CW. As shown in Fig. 15-(b), the beams from both the ends of the fixed polarization optical fiber 15 are synthesized by the half mirror 15, incident

12

EP 0 107 373 B1

on the light detector 17, and converted to an electric signal. This signal opens the gate to the phase detector 18 at the timing of incidence on the phase detector 18, whereby phase detection is effected. The beans CCW and CW syntheisized by the half mirror 23 are expressed as sin($\omega$t + According 00 1 thisshift,thereflectionpointatthehalfmirror23 isdeviatedbyg/8inconnectionwiththesignalCCW propagatedin- thefixedpolarizationopticalfiber15 inthecounterclockwisedirection.ThelightCW propagatedinthefixed- polarizationopticalfiber15 intheclockwisedirectionisnotinfluencedbythe above-mentionedshift.

Accordingly,whenthelightsCCWandCWare incidentonthefixedpolarizationopticalfiber15,a phasedifferenceofg/4isproducedbetweenthebeams CCWandCW.ThisstateisshowninFigs.15-(d)and 15-(e),(d)- indicatingthelightCCWand(e)indicating thelightCW.AsshowninFig.15-(b),thebeamsfrom boththeendsofthefix- edpolarizationopticalfiber15 aresynthesizedbythehalfmirror15,incidentonthe lightdetector17,andconvertedtoanelectricsignal. Thissignalopensthegatetothephasedetector18at thetimingofincidenceonthephasedetector18, wherebyphasedetectioniseffected.ThebeansCCW andCWsyntheisizedbythehalfmirror23areexpressed as sin(It + 00<HS¢750> |ÎÜ1À $\lambda$/4 can be produced between beams CCW and CW.

Figure 18 shows still another modification of the embodiment of Fig. 13. In Fig. 18, reference numeral 27 represents an adaptor, 29 a ceramic oscillator, and 30 a coupler. The same members as shown in Fig. 13 are represented by the same reference numerals. In this embodiment, a hole 27a is formed in the adaptor 27, and the half mirror 23 connected to the ceramic oscillator 29c through the coupler 30 is inserted in this hole 27a. In this structure, the ceramic oscillator 29 is oscillated, whereby a phase difference $\lambda$/4 is produced between beams CCW and CW as described above.

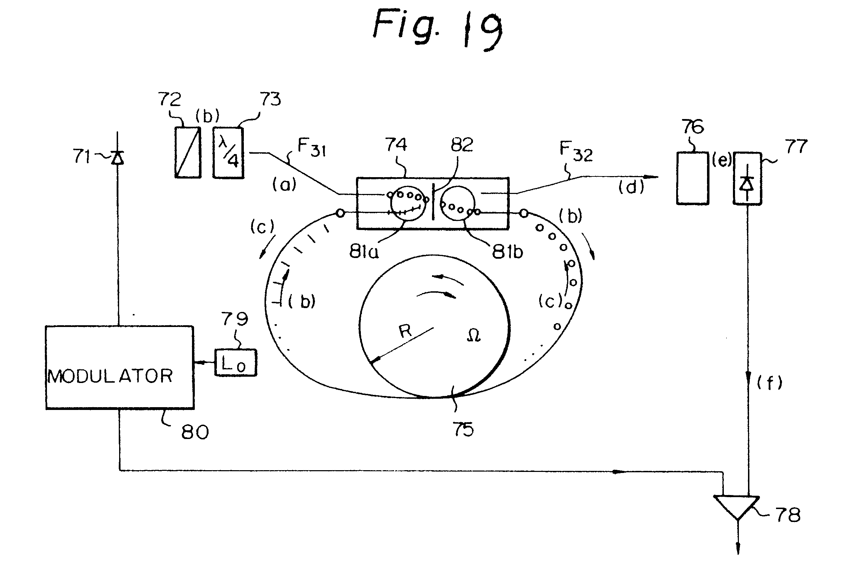

Figure 19 illustrates another modification of the embodiment of the fiber-optic gyro of Fig. 13 . In Fig. 19, reference numeral 71 represents a laser diode, 72 a Clan-Thomson prism, 73 $\lambda$/4 phase plate, 74 an electrostriction element, 75 a fixed polarization fiber, 76 a phase plate, 77 a light detector, 78 a phase detector, 79 an oscillator, and 80 a modulator. In the adaptor 74, ball lenses 81a and 81b, a polarization separating half mirror 82, and optical fibers $F_{31}$ and $F_{32}$ are arranged.

In the system illustrated in Fig. 19 , light emitted from the laser diode 71 is converted to linearly polarized light by the Glan-Thomson prism 72 and is converted to circularly polarized light by the $\lambda$/4 phase plate. The reason why the Glan-Thomson prism is used is that completely circularly polarized light is obtained at the time of conversion by the $\lambda$/4 phase plate. The circularly polarized light from the $\lambda$/4 phase plate is incident and convergent on the ball lens 81a through the optical fiber $F_{31}$ and is separated into beams having polarization planes crossing at right angles by the half mirror 82. One beam passes through the half mirror 82 and forms a clockwise signal passing through the ball lens 81b, arriving at the fixed polarization maintaining single mode fiber 85 and returning to the ball lens 81a through the optical fiber loop having a radius R. The other beam is reflected on the half mirror 82 and forms a counterclockwise signal guided to the fixed polarization fiber 75. Polarization maintaining axes of 81a, 81b fiber ends are arranged orthoganal to each other, and the fiber coil 75 is twisted by 90 degree, as shown in 75 in Fig. 19. The clockwise and counterclockwise signals are guided to the Babinet compensator phase plate 76 through the optical fiber $F_{32}$. After the phase shifting in the phase plate 76, the signals are detected by the light detector 77 and output through the phase detector.

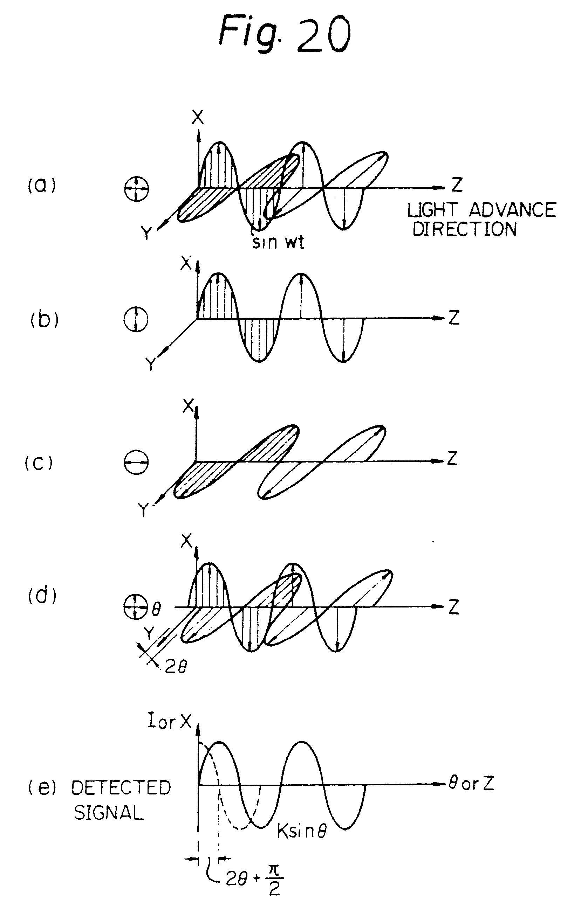

The signal polarization states at points (a), (b), (c), (d), (e), and (f) shown in Fig. 19 will also be explained with reference to Fig. 20.

Namely, Fig. 20-(a) corresponds to the light emitted from the laser diode, Fig. 20 (b) corresponds to the light polarized by the prism 72 and the light propagated in the fixed polarization fiber in the clockwise direction, Fig. 20-(c) corresponds to the light propagated in the fixed polarization fiber in the counterclockwise direction, and Fig. 20 -(d) corresponds to the light output from the adaptor 74. In this case, the angle $\theta$ is expressed as follows:

$$\theta = \frac{2\pi LR \cdot \Omega}{C\lambda}$$

wherein L stands for the total length of the fixed polarization fiber coil, R stands for the radius of the fiber coil, $\Omega$ stands for the rotation angle speed (radian/sec) of the fiber, $\lambda$ stands for the wavelength of the light, and C stands for the speed of the light.

In the signal (d) havng a phase difference of angle $2\theta$, the phase of the light propagated in one direction is phase-shifted by $\lambda$/2 by the phase plate 76. The angle $2\theta$ is increased to $2\theta$ + $\lambda$/2 as shown in Fig. 20 (e), and the light is input in the light detector 77. Figure 20 (e) corresponds to the output signal of the light detector 77. This signal is phase-detected by the phase detector 78 and output therefrom.

13

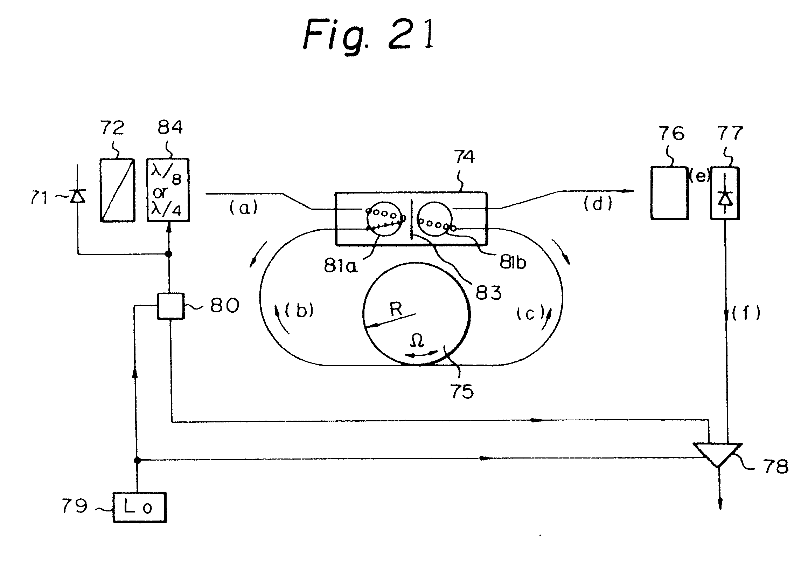

Figure 21 illustrates another modification of the embodiment shown in Fig. 13 The embodiment shown in Fig. 21 differs from the embodiment shown in Fig. 19 in the point that the output of the laser diode 71 is converted to circularly polarized light by a $\lambda/8$ or $\lambda/4$ phase modulator 84 and that this polarized light is incident on the ball lens 81a. Other circuits and functions are the same as in Fig. 19.

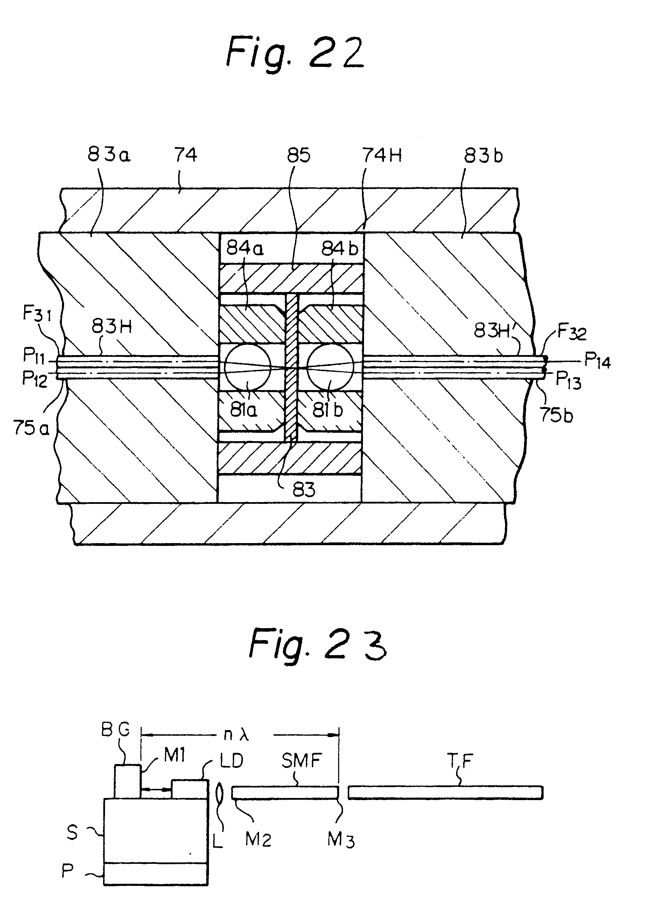

Light input and output portions of the ball lenses 81a and 81b, optical fibers $F_{31}$ and $F_{32}$, and fixed polarization fiber 75 in Figs. 19 and 21 are constructed as shown in Fig. 22. In Fig. 22, reference numerals 83a and 83b denote cores, 84a and 84b lens holders, and 85 a supporting member.

As shown in Fig. 22, the end of the optical fiber $F_{31}$ and the end 75a of the fixed polarization fiber 75 are disposed in a hole 83H formed at the center of the cylindrical core 83a. The end of the optical fiber $F_{32}$ and the end 75b of the fixed polarization fiber 75 are disposed in a hole 83H' formed at the center of the cylindrical core 83b. The cores 83a and 83b are inserted in the sleeve-like adaptor 84 so that the centers of the cores 83a and 83b are matched with each other. They are secured in this state by securing means (such as cap nuts). The ball lenses 81a and 81b are supported in front of the optical fiber having end faces exposed to the centers of the cores 83a and 83b by means of supporting members 84a and 84b. The half mirror 83 (composed of a dielectric multilayer film) is supported between the ball lenses 81a and 81b by the supporting member 85. The light P1 propagated through the optical fiber $F_{31}$ is separated into beams $P_{12}$ and $P_{13}$ by the half mirror 83.

The beams $P_{12}$ and $P_{13}$ are propagated through the fixed polarization fiber 75 in directions opposite to each other and are synthesized to a beam $P_{14}$ by the half mirror 83. The beam $P_{14}$ is incident on the optical fiber $F_{32}$.

In the fiber-optic gyro of the present invention, the laser diode must stabilize the luminescence wavelength. In the conventional technique, a laser diode having a good luminescence wavelength stabilizing effect is chosen, and an isolator is arranged to prevent changes of the luminescence wavelength caused by reflected light from an end face of a light-transmitting optical fiber. However, this isolator cannot completely block the reflected light. Furthermore, reflection is caused on the end face of the isolator. Accordingly, the luminescence wavelength inevitably fluctuates.

This drawback can be removed by a single-mode semiconductor laser diode. Reflecting members are arranged to confront light-emergent parts on both the end portions of a semiconductor laser diode so that an etalon is constructed. Figure 23 is a diagram of a preferred laser diode used in the present invention. In Fig. 23, P stands for a Peltier element, S stem, BG a bulk glass, SMF a single-mode fiber, M1, M2, and M3 reflecting faces, TF transmitting optical fiber, and L a lens.

In order to perform locking of the longitudinal mode highly stable and precisely, the bulk glass BG is arranged on a rear luminescence face of the laser diode LD. The single-mode fiber SMF, in which an etalon is constructed on the end faces by the reflecting faces M2 and M3, is arranged on a front illuminescence face of the laser diode LD.

In the above-mentined structure, one etalon is constructed between the reflecting face M1 of the bulk glass BG and the laser diode LD, and another etalon is constructed between the reflecting faces M2 and M3 of the single-mode fiber. The laser diode forms one etalon. Accordingly, three etalons are arranged in series. The optical distance between the reflecting faces M1 and M2 is n times the luminescence wavelength $\lambda$.

The functions will now be described. A laser beam having a certain spectrum width emerges from the laser diode LD. In this laser beam, the emergent angle varies according to the spectrum. Accordingly, the incident angle on the reflecting face M1 of the bulk glass BG varies. The laser beam is divided into light reflected from the reflecting face M1 and light not reflected therefrom according to the incident angle. Accordingly, the spectrum of the light fed back to the laser diode LD is narrower than the spectrum of the light emerging from the laser diode LD.

Furthermore, wide light spectrum width of a single longitudinal mode (from the optical system shown in Fig. 23 can be obtained by modulating the optical length $n_\ell$; such as position modulation of reflecting faces M1 to M3, or LD current modulation.

The light from the laser diode LD, which has a appropriate spectrum width, is incident on the single-mode fiber SMF. Reflection is repeated between the reflecting faces M2 and M3 in the single-mode fiber SMF. Only light having a certain wavelength determined by the length of the single-mode fiber is transmitted through the reflecting faces M2 and M3. The transmitted light is fed back to the laser diode LD through the reflecting face M2 and is separately incident on the transmitting optical fiber TF through the reflecting face M3.

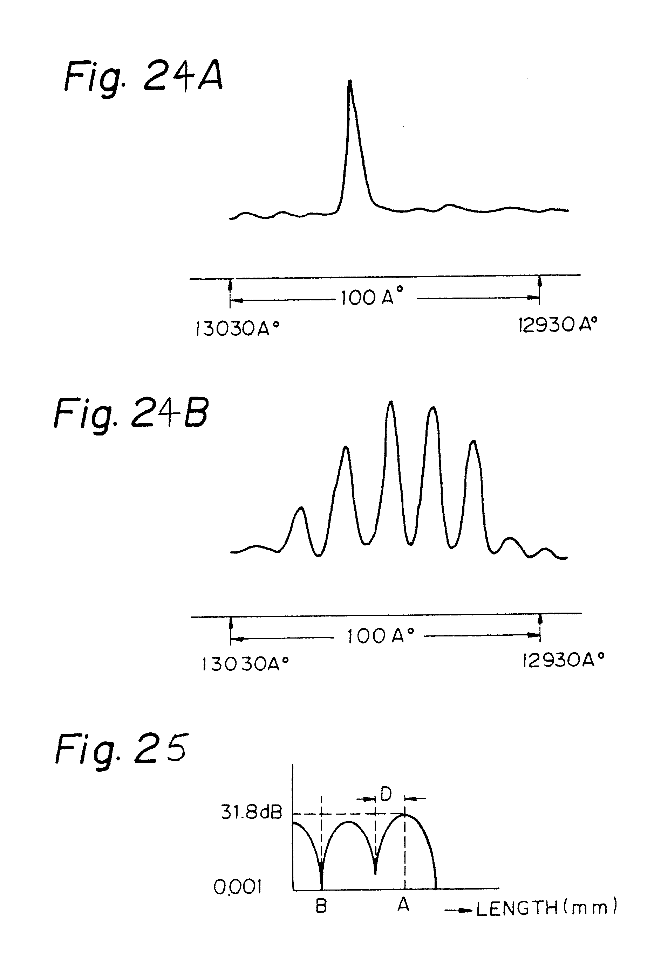

The results obtained by use of the preferred laser diode are shown in Fig. 24A without temperature drift of wavelength. According to the preferred laser diode, one longitudinal mode alone appears. Figure 24B is a diagram of the luminescence spectrum from a laser diode having conventional constitution. As is seen from Fig. 24B according to the conventional technique, several longitudinal modes are generated within a region of 100 Å, (10 nm) with temperature drift of about 2/5 Å/° C (0.25 nm/c).

Results of experiments made on the relationship between the length of the single-mode fiber SMF and the transmittance ratio of the reflecting face will now be described. The length of the single-mode fiber SMF is changed with 5 mm as the center. The reflectance of each of the reflecting faces M2 and M3 is 95% and the used wavelength λ is 1.305 μm. The obtained results are shown in Fig. 25.

In Fig. 25 , the abscissa indicates the length (mm) of the single-mode fiber, and the ordinate indicates the transmission loss. The length (point A) giving the maximum transmission loss (31.8 dB) is 5.00143 mm, and the length (point B) giving the minimum transmission loss (0.00091 dB) is 5.000756 mm. As is apparent from Fig. 25, the transmission loss is periodically changed by changing the length of the single-mode fiber.

From Fig. 25, it is understood that the difference D between the length giving the maximum transmission loss and the length giving the minimum transmission loss is as follows:

$$D = \frac{\lambda}{4n} = \frac{A - B}{3} \doteq 0.225 \ \mu m$$

As is apparent from the foregoing illustration, according to the preferred laser diode, a single-mode laser beam can be obtained. The level of this single-mode laser beam can be adjusted by fine adjustment of the length of the single-mode fiber.

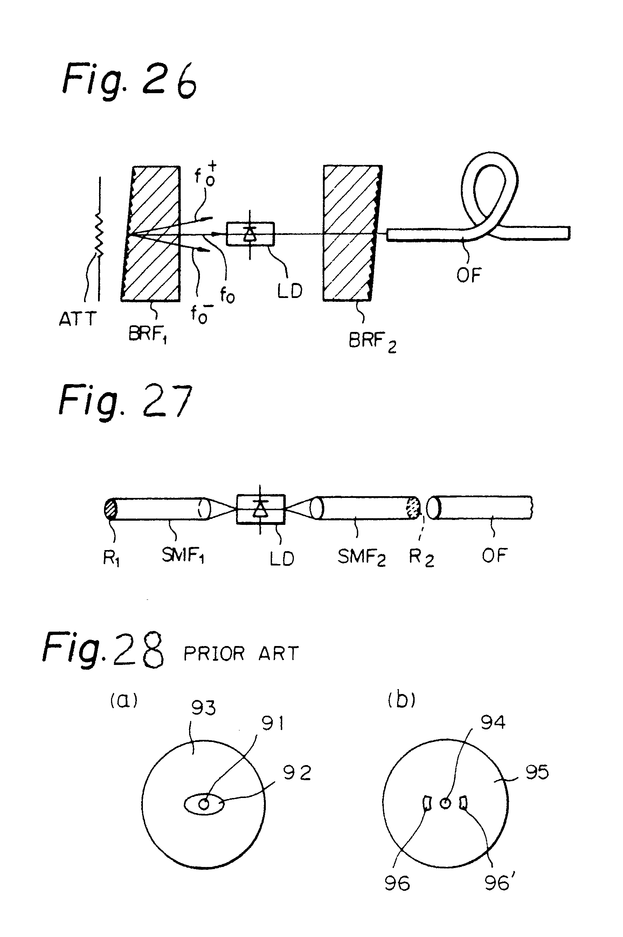

Figure 26 is a block diagram of a preferred light source portion of the present invention. In Fig. 26 a laser diode LD is inserted between narrow-band reflection filters BRF1 and BRF2, a light absorber ATT is arranged in back of the narrow-band filter BRF1, and an optical fiber OF for incidence of output light on the optical fiber coil is arranged in back of the other narrow-band reflection filter BRF2. In each of the narrow-band reflection filters BRF1 and BRF2, the front end face is a plane perpendicular to the optical axis and the rear end face is a diffraction lattice plane inclined at a predetermined angle to the plane vertical to the optical axis. Only the central light of a wavelength of fo is reflected as a light wave of a very narrow band of less than $10^{-7}$ mm width in parallel to the incident light. Other components of wavelength fo$^-$ or fo$^+$ are reflected by angles different from the angle of the incident light, and, hence, they are not fed back to the laser diode LD. The light transmitted through the narrow-band reflection filter BRF 1 is absorbed by the light absorber ATT. The band width of the narrow-band reflection filter having the above structure can be reduced below several angstroms. Accordingly, the output of the laser diode can be stabilized in proportion to reduction of the band width. More specifically, since the phase of reflected light from the narrow-band reflection filter is always stabilized, the laser diode is stabilized only by controlling the distance between narrow-band reflection filter and the laser diode LD.

By using the above-mentioned light source, the coherency of light incident on the optical fiber coil is increased, and a very small rotation speed can be detected at a high precision even using very long (100 km) fiber coil. Furthermore, since the light source is stabilized and hardly influenced by the return light, an isolator need not be arranged in the light route, and the apparatus is simplified.

Another preferred light source portion is illustrated in Fig.27 Referring to Fig. 27 the laser diode LD is inserted between etalons SMF1 and SMF2 composed of a single-mode optical fiber. One end face of each of the etalons act as plane reflecting mirrors R1 and R2. Light incident from the laser diode LD is reflected on the plane reflecting mirror R1 or R2 and fed back to the laser diode LD. In this case, the single-mode optical fiber etalons SMF1 and SMF2 constitute a narrow-band reflection filter.

According to the preferred light source portions shown in Figs. 26 and 27, there can be provided a fiber-optic gyro system in which the detection is highly stabilized, the efficency is greatly increased, and the apparatus is simplified.

The polarization-plane storing fiber used in the present invention preferably is low cost and has good properties and easy handling.

Examples of a conventional polarization-plane storing fiber are illustrated in Figs.28 (a) and 28 (b). In Fig. 28 (a), a cladding 92 surrounding a core 91 is formed to have an oval shape. A jacket 93 encloses this cladding 92. Heat strain caused at the time of production gradually changes the refractive index to be largest in the direction of the short axis and smallest in the direction of the long axis.

In the fiber shown in Fig. (b), voids 96 and 96' are formed on a cladding 95 surrounding a core 94 symmetrically with respect to the axis. Also in this fiber, a gradual change of the refractive index is caused by the heat strain at the time of production.

As is readily be understood, it is very difficult to manufacture a fiber having a structure as described above and to obtain uniform characteristics along the entire length of the fiber, such as fluctuation in the polarization maintaining axis direction crosstalk, and large polarization wavelength dispersion with large transmission loss (~5 dB/km). Further, in connecting fibers to each other, not only center alignment such as conducted in the conventional technique but also sectional form matching is necessary. In the case of fibers having a core dimension smaller than 10 microns, this sectional form matching is not easy.

Moreover, when the above-mentioned fiber is used in the form of a coil as an angular speed sensor, if a variation of the refractive index due to the inner stress caused at the time of winding is taken into consideration, the positional relationship of the section to the winding face should be kept constant. Thus, handling of the fiber is very difficult.

The above drawback can be removed by a single-mode polarization plane storing optical fiber which includes a fiber composed of quartz and having a triple structure including a core, a cladding, and a jacket, in which the difference of the refractive index between the core and cladding

$$(\frac{n1 - n2}{2n1}$$

x 100 in which nl represents the refractive index of the core and n2 stands for the refractive index of the cladding) is 0.13 $\pm$ 0.05, the fiber being wound on a drum.

More specifically, in the preferred fiber, the sections of the core, cladding and jacket are concentric with one another. Therefore, the fiber of the present invention can be manufactured according to steps similar to those adopted for production of the conventional polarization plane non-storing fibers. Connection of fibers can easily be accomplished by only center alignment. Incidentally, $\pm0.05$ is a production error. This error is caused since the refractive index is smaller than those of ordinary optical fibers.

In the linear state, this optical fiber has no polarization-plane storing property. If the optical fiber is wound on a cylindrical drum, however, the outer portion of the optical fiber is elongated in the direction rectangular to the axis of the cylindrical drum and is contracted on the drum side. On the other hand, no distortion is caused in the direction that is parallel to the axis of the cylindrical drum. Thus, the shape is changed according to directions, and a polarization-plane storing property is thus manifested. This may be regarded as being similar to a rectangle-circle wave guide convertor.

Of course, if a conventional optical fiber for communication is bent, a minute directionality of the refractive index is produced, but since the polarization-plane storing property is not considered and the refractive indexes of the core and cladding are selected so that the transmission loss is reduced to a minimum level, the ratio between the refractive indexes of the core and cladding

$$(\frac{n1 - n2}{2n1}$$

x 100 in which n1 stands for the refractive index of the core and n2 stands for the refractive index of the cladding) is as large as 0.2% to 0.5%.

Even if this fiber is bent, the polarization-plane storing property attained is very small. Therefore, the fiber cannot be used for a gyro as described above.

In the preferred optical fiber, by further reducing the difference of the refractive index between the core and cladding so as to adjust

$$\frac{n1 - n2}{2n1}$$

x 100% to 0.13 $\pm$ 0.05%, the intended polarization-plane storing property can be improved to a practically applicable level.

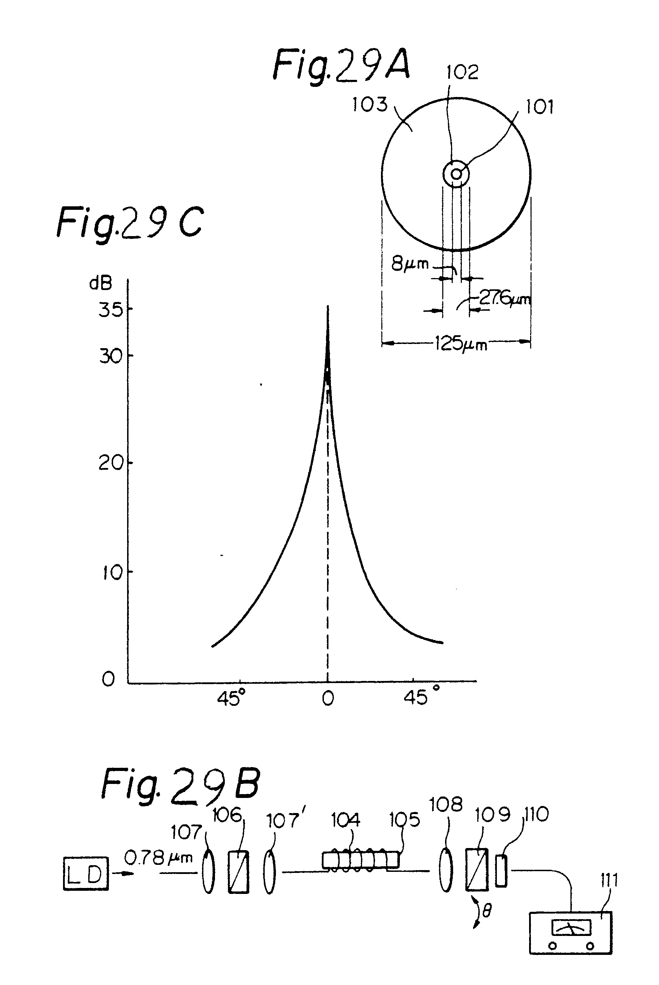

The preferred polarization-plane storing fiber is shown in Figs. 29A to 29C, in which 29A is an enlarged of cross-section of the fiber, Fig. 29B is a block diagram of the structure for measuring the polarization-plane storing property, and Fig. 29C is a curve of the polarization-plane storing characteristics.

The optical fiber shown in Fig. 29A has a triple structure comprising a core 101 having a circular section, a clad 102 having a circular section, and a jacket 103 having a circular section. The refractive index ratio is adjusted to 0.13. The dimensions are as shown in Fig. 29A. About 500 m of the optical fiber 104 is wound on a drum 105 having a diameter of 150 mm, as shown in Fig. 29B. Semiconductor laser beam having a wavelength of 0.78 μm is incident on the starting end of the optical fiber 104 through a deflecting prism 106 and lenses 107 and 107', a linearly polarized laser beam is propagated in the coil, and an output light emerging from the other end of the fiber 104 is guided to a detector 110 through a condenser lens 108 and a rotation analyzer 109 to actuate an output meter 111.

In Fig. 29C the angle $\theta$ of the linear polarization plane of the light obtained by rotating the analyzer 109 is plotted on the abscissa and the value (dB) indicated on the output meter 111 is plotted on the ordinate. The obtained curve of the characteristics shown in Fig. 29C indicates that the preferred optical fiber has a good polarization-plane storing property.

As is apparent from the foregoing description, the preferred polarization-plane storing fiber can be manufactured according to steps similar to those adopted for production of conventional optical fibers, connection of fibers can be accomplished only by center alignment, and no special attention need be paid to winding of the fiber on the drum. Accordingly, an excellent effect of eliminating the defects of conventional fibers of this type can be attained.

## Claims

1. A fibre optic gyro including a laser diode (LD), light detector ($DET_1$, $DET_2$), a coiled optical fibre ($FC_1$), an optical coupler arranged to couple light from the laser diode (LD) to the coil ($FC_1$) to pass in opposite directions around the coil ($FC_1$) and to couple light passing in both directions around the coil to the light detector ($DET_1$, $DET_2$), and a first optical fibre ($F_1$) having one end arranged to receive light from the laser diode (LD) and carry it to its other end, characterised in that the gyro also includes a second optical fibre ($F_2$) having its one end aligned with the other end of the first optical fibre ($F_1$) and having its other end coupled to the light detector ($DET_2$), and in that the optical coupler comprises a half mirror (HF) located between the other end of the first optical fibre ($F_1$) and the one end of the second optical fibre ($F_2$), a first ball lens ($L_3$) located between the other end of the first optical fibre ($F_1$) and the half mirror (HF), and a second ball lens ($L_4$) located between the half mirror (HF) and the one end of the second optical fibre ($F_2$), ends ($F_3$, $F_4$) of the coiled optical fibre ($FC_1$) facing the first and second ball lenses ($L_3$, $L_4$), and being aligned with each other and being parallel to the other end of the first optical fibre ($F_1$) and the one end of the second optical fibre ($F_2$), the arrangement being such that a light beam from the laser diode (LD) is directed via the first optical fibre ($F_1$) onto the half mirror (HF) through the first lens ($L_3$), the light beam is split into two by the half mirror (HF) with one part being reflected from the half mirror (HF) being directed onto one end ($F_3$) of the coiled optical fibre ($FC_1$) through the first lens ($L_3$), and the other part being transmitted through the half mirror (HF) and being directed onto the other end ($F_4$) of the coiled optical fibre ($FC_1$) through the second lens ($L_4$) so that the light beams are propagated through the coiled optical fibre ($FC_1$) in opposite directions; after passage around the coiled optical fibre ($FC_1$) in opposite directions the light beams are synthesised by part of the light beam leaving the end ($F_3$) being transmitted through the half mirror whilst part of the light beam leaving the end ($F_4$) is reflected from the half mirror (HF) to impinge on the one end of the second optical fibre ($F_2$) through which the synthesised beam is coupled to the light detector ($DET_2$), the output of the light detector ($DET_2$) enabling the speed of rotation of the coiled optical fibre ($FC_1$) to be derived.

2. A fibre-optic gyro according to claim 1, wherein the first and second lenses ($L_3$, $L_4$) are formed from a monoaxial crystal.

3. A fibre-optic gyro according to claim 1 or 2, wherein a control portion ($PC_2$) for controlling the orientation of the polarisation plane of the light is provided in a part of the coiled optical fibre ($FC_1$).

4. A fibre-optic gyro according to any one of the preceding claims, wherein a control portion ($PC_1$) for controlling the orientation of the polarisation of the light is provided between the laser diode (LD) and the first lens ($L_3$).

5. A fibre-optic gyro according to any one of the preceding claims wherein the half mirror ($HF_1$, $HF_2$) is coupled to an electrostriction element (14, 28, 29) to shift the position of the half mirror ($HF_1$, $HF_2$) to provide a phase difference between the light beams incident on the ends of the coiled optical fibre ($FC1_1$) and when the light beams are synthesised and converted to an electrical signal, phase detection is carried out and the phase difference is measured.

6. A fibre-optic gyro system according to claim 5, wherein the coil delay time determined by the length L of the coiled optical fibre (FC) and the light propagation speed C of the coiled optical fibre (FC) is adjusted to $\tau$ coil, and the light emission time interval D is adjusted so that the following relationship is established:

D > $\tau$coil

the light emission time interval D is made equal to a time interval $D_{det}$ for opening an electric gate in the light detector (DET) and the time deviation between the interval D and the interval $D_{det}$ is made equal to the delay time.

7. A fibre-optic gyro according to any one of the preceding claims, wherein reflecting members ($R_1$, $R_2$, $M_1$, $M_2$, $M_3$) are arranged on opposite sides of the semiconductor laser diode (LD) so that an etalon is constructed.

8. A fibre optic gyro according to claim 13, wherein one of the reflecting members is a reflecting film ($R_1$, $R_2$) formed on the end face of a single-mode fibre (SMF).

9. A fibre-optic gyro according to any one of the preceding claims, wherein the laser diode (LD) is provided with a narrow-band reflection filter ($BRF_1$, $BRF_2$).

10. A fibre-optic gyroscope according to any one of the preceding claims, wherein the coiled optical fibre (FC) is a single-mode polarisation plane storing optical fibre comprising a fibre composed of quartz and having a triple structure (Figure 32A) including a core(101) a clad (102) and a jacket (103) in which the difference of the refractive index between the core (101) and the clad (102) is defined as

$$\frac{n1 - n2}{2n1} \times 100$$

in which nl represents the refractive index of the core (101) and n2 stands for the refractive index of the clad (102), is 0.13 ± 0.05, the fibre being wound on a drum.

11. A fibre optic gyro according to any one of the preceding claims, which includes two light detectors ($DET_1$, $DET_2$) one coupled to the other end of the second optical fibre ($F^2$) and the other coupled to the first optical fibre ($F_1$).

12. A fibre optic gyro according to any one of the preceding claims, in which end faces of the first, second and correct optical fibres ($F_1$,$F_2$,$F_3$,$F_4$) are not normal to the direction of light propagation leaving or entering them and are arranged at an inclination so that the incident and emergent angles are made equal to each other.

## Revendications

1. Gyro à fibre optique incluant une diode laser (LD), des détecteurs de lumière ($DET_1$, $DET_2$), une fibre optique bobinée ($FC_1$), un coupleur optique servant à coupler la lumière issue de la diode laser (LD) à la bobine ($FC_1$) pour qu'elle passe dans des sens opposés dans la bobine ($FC_1$) et à coupler la lumière passant dans les deux sens dans la bobine aux détecteurs de lumière ($DET_1$, $DET_2$), et une première fibre optique ($F_1$) ayant une extrémité placée pour recevoir la lumière issue de la diode laser (LD) et la transmettre à son autre extrémité, caractérisé en ce que le gyro comprend aussi une seconde fibre optique ($F_2$) ayant une extrémité alignée avec l'autre extrémité de la première fibre optique ($F_1$) et ayant son autre extrémité couplée au détecteur de lumière ($DET_2$), et en ce que le coupleur optique comprend un miroir semi-transparent (HF) situé entre l'autre extrémité de la première fibre optique ($F_1$) et l'extrémité de la seconde fibre optique ($F_2$), une première lentille sphérique ($L_3$) située entre l'autre extrémité de la première fibre optique ($F_1$) et le miroir semi-transparent (HF), et une seconde lentille sphérique ($L_4$) située entre le miroir semi-transparent (HF) et l'extrémité de la seconde fibre optique ($F_2$), les extrémités ($F_3$, $F_4$) de la fibre optique bobinée ($FC_1$) faisant face aux première et seconde lentilles sphériques ($L_3$, $L_4$), et étant alignées mutuellement et parallèles à l'autre extrémité de la première fibre optique ($F_1$) et l'extrémité de la seconde fibre optique ($F_2$), la disposition étant telle qu'un faisceau lumineux issu de la diode laser (LD) est dirigé via la première fibre optique (F₁) sur le miroir semi-transparent (HF) à travers la première lentille (L₃), le faisceau lumineux est séparé en deux par le miroir semi-transparent (HF) avec une partie réfléchie à partir du miroir semitransparent (HF) et dirigée sur l'extrémité (F₃) de la fibre optique bobinée (FC₁) à travers la première lentille (L3), et l'autre partie transmise à travers le miroir semi-transparent (HF) et dirigée sur l'autre extrémité (F₄) de la fibre optique bobinée (FC₁) à travers la seconde lentille (L₄) si bien que les faisceaux lumineux se propagent à travers la fibre optique bobinée (FC₁) dans des sens opposés; après passage dans la fibre optique bobinée (FC₁) dans des sens opposés les faisceaux lumineux sont synthétisés à partir du faisceau lumineux sortant de l'extrémité (F₃) qui est transmis à travers le miroir semi-transparent tandis que la partie du faisceau lumineux sortant de l'extrémité (F₄) se réfléchit sur le miroir semi-transparent (HF) pour frapper l'extrémité de la seconde fibre optique (F₂) à travers laquelle le faisceau synthétisé est couplé au détecteur de lumière (DET₂), la sortie du détecteur de lumière (DET₂) permettant de déduire la vitesse de rotation de la fibre optique bobinée (FC₁).

2. Gyro à fibre optique selon la revendication 1, dans lequel les première et seconde lentilles (L₃, L₄) sont formées à partir d'un cristal monoaxe.

3. Gyro à fibre optique selon la revendication 1 ou 2, dans lequel une partie de commande (PC₂) commandant l'orientation du plan de polarisation de la lumière est installée dans une partie de la fibre optique bobinée (FC₁).

4. Gyro à fibre optique selon l'une quelconque des revendications précédentes, dans lequel une partie de commande (PC₁) commandant l'orientation de la polarisation de la lumière est installée entre la diode laser (LD) et la première lentille (L₃).

5. Gyro à fibre optique selon l'une quelconque des revendications précédentes, dans lequel le miroir semi-transparent (HF₁, HF₂) est couplé à un élément à électro-striction (14, 28, 29) pour décaler la position du miroir semi-transparent (HF₁, HF₂) de façon à fournir une différence de phase entre les faisceaux atteignant les extrémités de la fibre optique bobinée (FC₁) et quand les faisceaux lumineux sont synthétisés et convertis en un signal électrique, une détection de phase est effectuée et la différence de phase est mesurée.

6. Système de gyro à fibre optique selon la revendication 5, dans lequel le temps de retard de la bobine déterminé par la longueur L de la fibre optique bobinée (FC) et la vitesse de propagation de la lumière C de la fibre optique bobinée (FC) est ajusté à τcoil, et la durée d'émission de lumière D est ajustée de façon telle que la relation suivante est établie:

$$D > τcoil$$

la durée d'émission de lumière D est rendue égale à une durée Ddet pour ouvrir une porte électrique dans le détecteur de lumière (DET) et la différence de temps entre l'intervalle D et l'intervalle $D_{det}$ est égalée au temps de retard.

7. Gyro à fibre optique selon l'une quelconque des revendications précédentes, dans lequel des éléments réfléchissants (R₁, R₂, M₁, M₂, M₃) sont placés sur des côtés opposés de la diode laser à semi-conducteur (LD) de façon telle qu'un étalon est construit.

8. Gyro à fibre optique selon la revendication 13, dans lequel l'un des éléments réfléchissants est un film réfléchissant (R₁, R₂) formé sur la face d'extrémité d'une fibre optique monomode (SMF).

9. Gyro à fibre optique selon l'une quelconque des revendications précédentes, dans lequel la diode laser (LD) est associée à un filtre réfléchissant à bande étroite (BRF₁, BRF₂).

10. Gyroscope à fibre optique selon l'une quelconque des revendications précédentes, dans lequel la fibre optique bobinée (FC) est une fibre optique monomode à stockage de plan de polarisation comprenant une fibre composée de quartz et ayant une structure triple (figure 32A) incluant un coeur (101) un revêtement (102) et une gaine (103) dans laquelle la différence de l'indice de réfraction entre le coeur (101) et le revêtement (102) définie par:

$$\frac{n_1 - n_2}{2\ n_1} \times 100$$

où $n_1$ représente l'indice de réfraction du coeur (101) et $n_2$ représente l'indice de réfraction du revêtement (102), est $0{,}13 \pm 0{,}05$, la fibre étant enroulée sur un tambour.

11. Gyro à fibre optique selon l'une quelconque des revendications précédentes, qui inclut deux détecteurs de lumière ($DET_1$, $DET_2$) l'un couplé à l'autre extrémité de la seconde fibre optique ($F_2$) et l'autre couplé à la première fibre optique ($F_1$).

12. Gyro à fibre optique selon l'une quelconque des revendications précédentes, dans lequel les faces d'extrémité des première, seconde fibres optiques et de la fibre optique bobinée ($F_1,F_2,F_3,F_4$) ne sont pas normales à la direction de propagation de la lumière en sortant ou y entrant et sont disposées selon une inclinaison telle que les angles incident et émergent sont mutuellement égaux.


## Ansprüche

1. Faseroptikgyroskop mit einer Laserdiode (LD), einem Lichtdetektor ($DET_1$, $DET_2$), einer gewickelten optischen Faser ($FC_1$) und einem optischen Koppler, der angeordnet ist, um Licht von der Laserdiode (LD) mit der Spule ($FC_1$) zu koppeln, um es in entgegen- gesetzte Richtungen um die Spule ($FC_1$) zu führen, und um Licht zu koppeln, das in beiden Richtungen um die Spule zu dem Lichtdetektor ($DET_1$, $DET_2$) geführt wird, und einer ersten optischen Faser ($F_1$), die ein Ende hat, das angeordnet ist, um Licht von der Laserdiode (LD) zu empfangen und es zu ihrem anderen Ende zu tragen, dadurch gekennzeichnet, daß das Gyroskop auch eine zweite optische Faser ($F_2$) umfaßt, die ein Ende hat, das mit dem anderen Ende der ersten optischen Faser ($F_1$) verbunden ist, und deren anderes Ende mit dem Lichtdetektor ($DET_2$) gekoppelt ist, und daß der optische Koppler einen Halbspiegel (HF) umfaßt, der zwischen dem anderen Ende der ersten optischen Faser ($F_1$) und dem einen Ende der zweiten optischen Faser ($F_2$) gekoppelt ist, eine erste Kugellinse ($L_3$), die zwischen dem anderen Ende der ersten optischen Faser ($F_1$) und dem Halbspiegel (HF) angeordnet ist, und eine zweite Kugellinse ($L_4$), die zwischen dem Halbspiegel (HF) und dem einen Ende der zweiten optischen Faser ($F_2$) angeordnet ist, wobei die Enden ($F_3$, $F_4$) der gewickelten optischen Faser ($FC_1$) der ersten bzw. der zweiten Kugellinse ($L_3$, $L_4$) zugewandt und miteinander ausgerichtet und parallel zu dem anderen Ende der ersten optischen Faser ($F_1$) und dem einen Ende der zweiten optischen Faser ($F_2$) angeordnet sind, wobei die Anordung so getroffen ist, daß ein Lichtstrahl von der Laserdiode (LD) über die erste optische Faser ($F_1$) durch die erste Linse ($L_3$) auf den Halbspiegel (HF) gerichtet wird, der Lichtstrahl durch den Halbspiegel (HF) in zwei geteilt wird, von denen ein Teil, der von dem Halbspiegel (HF) reflektiert wird, durch die erste Linse ($L_3$) auf ein Ende ($F_3$) der gewickelten optischen Faser ($FC_1$) gerichtet wird, und der andere Teil durch den Halbspiegel (HF) transmittiert und durch die zweite Linse ($L_4$) auf das andere Ende ($F_4$) der gewickelten Faser ($FC_1$) gerichtet wird, so daß die Lichtstrahlen durch die gewickelte optische Faser ($FC_1$) in entgegengesetzte Richtungen propagiert werden; nach Durchgang um die gerollte optische Faser ($FC_1$) in entgegengesetzte Richtungen werden die Lichtstrahlen, synthetisiert, indem der Teil des Lichtstrahles, der das Ende ($F_3$) verläßt, durch den Halbspiegel transmittiert wird, während der Teil des Lichtstrahles, der das Ende ($F_4$) verläßt, von dem Halbspiegel (HF) reflektiert wird, um auf das eine Ende der zweiten optischen Faser ($F_2$) aufzutreffen, durch welche der synthetisierte Strahl mit dem Lichtdetektor ($DET_2$) gekoppelt wird, wobei der Ausgang des Lichtdetektors ($DET_2$) ermöglicht, daß die Rotationsgeschwindigkeit der gewickelten optischen Faser ($FC_1$) abgeleitet wird.

2. Faseroptikgyroskop nach Anspruch 1, bei dem die ersten und zweiten Linsen ($L_3$, $L_4$) aus einem monoaxialen Kristall gebildet sind.

3. Faseroptikgyroskop nach Anspruch 1 oder 2, bei der ein Steuerabschnitt ($PC_2$) zum Steuern der Orientierung der Polarisationsebene des Lichtes in einem Teil der gewickelten optischen Faser ($FC_1$) vorgesehen ist.

4. Faseroptikgyroskop nach einem der vorhergehenden Ansprüche, bei dem ein Steuerabschnitt ($PC_1$)

zum Steuern der Orientierung der Polarisation des Lichtes zwischen der Laserdiode (LD) und der ersten Linse ($L_3$) vorgesehen ist.

5. Faseroptikgyroskop nach einem der vorhergehenden Ansprüche, bei dem der Halbspiegel ($HF_1$, $HF_2$) mit einem Elektrostriktionselement (14, 28, 29) gekoppelt ist, um die Position des Halbspiegels ($HF_1$, $HF_2$) zu verschieben, um eine Phasendifferenz zwischen den Lichtstrahlen zu erzeugen, die auf die Enden der gewickelten optischen Faser ($FC1_1$) auftreffen, und wenn die Lichtstrahlen synthetisiert zu einem elektrischen Signal konvertiert sind, wird die Phasendetektion ausgeführt und die Phasendifferenz gemessen.

6. Faseroptikgyroskop nach Anspruch 5, bei dem die Spulenverzögerungszeit, die durch die Länge L der gewickelten Faser (FC) und durch die Lichtausbreitungsgeschwindigkeit C der gewickelten optischen Faser (FC) auf die $\tau$ Spule eingestellt wird, und das Lichtemissionszeitintervall D so eingestellt wird, daß die folgende Relation hergestellt wird:

$D > \tau$ Spule

wobei das Lichtemissionszeitintervall D gleich einem Zeitintervall $D_{det}$ zum öffnen eines elektrischen Tores in dem Lichtdetektor (DET) gemacht wird, und die Zeitabweichung zwischen dem Intervall D und dem Intervall $D_{det}$ gleich der Verzögerungszeit gemacht wird.

7. Faseroptikgyroskop nach einem der vorhergehenden Ansprüche, bei der reflektierende Teile ($R_1$, $R_2$, $M_1$, $M_2$, $M_3$) auf gegenüberliegenden Seiten der Halbleiterlaserdiode (LD) so angeordnet sind, daß ein Etalon konstruiert ist.

8. Faseroptikgyroskop nach Anspruch 13, bei dem eines der reflektierenden Teile ein reflektierender Film ($R_1$, $R_2$) ist, der auf der Endoberfläche einer Einzelmodusfaser (SMF) gebildet ist.

9. Faseroptikgyroskop nach einem der vorhergehenden Ansprüche, bei dem die Laserdiode (LD) mit einem Schmalband-Reflexionsfilter ($BRF_1$, $BRF_2$) versehen ist.

10. Faseroptikgyroskop nach einem der vorhergehenden Ansprüche, bei der die gewickelte optische Faser (FC) eine die Polarisationsebene speichernde Einzelmodusfaser ist, die eine Faser umfaßt, die aus Quarz besteht und die eine dreifache Struktur (Figur 32A) hat, die einen Kern (101), eine Auskleidung (102) und einen Mantel (103) aufweist, in der die Differenz des Brechungsindex zwischen dem Kern (101) und der Auskleidung (102) definiert ist als

$$\frac{n1 - n2}{2n1} \times 100$$

worin n1 den Brechungsindex des Kerns (101) repräsentiert und n2 für den Brechungsindex der Auskleidung (102) steht, mit dem Wert 0,13 ± 0,05, wobei die Faser auf eine Trommel aufgewickelt ist.

11. Faseroptikgyroskop nach einem der vorhergehenden Ansprüche, welche zwei Lichtdetektoren ($DET_1$, $DET_2$) umfaßt, eines gekoppelt mit dem anderen Ende der zweiten optischen Faser ($F_2$) und das 2andere mit der ersten optischen Faser ($F_1$) gekoppelt.

12. Faseroptikgyroskop nach einem der vorhergehenden Ansprüche, bei dem Endoberflächen der ersten, zweiten und gewickelten optischen Fasern ($F_1$, $F_2$, $F_3$, $F_4$) nicht normal zu der Richtung der Lichtausbreitung sind, welches sie verläßt oder in sie eintritt, und mit einer Neigung so angeordnet sind, daß die einfallenden und die austretenden Winkel einander gleich gemacht sind.

# Fig. 1

EP 0 107 373 B1

Fig. 2

Fig. 3

EP 0 107 373 B1

# Fig. 4A

# Fig. 4B

# Fig. 5A

LD    FGS

| FIBER GYRO SYSTEM | OUT₁ |
|---|---|
| | OUT₂ |

$OUT_1$

$OUT_2$

PULSE GENERATOR    PG

LOCK-IN AMPLIFIER    LA

$OUT_3$

# Fig. 5 B

$$\tau = \frac{\ell \cdot n}{c}$$

(a) CLOCK

(b) L D    on / off

(C) GATE    open / close

TIME

## Fig. 6

## Fig. 7

27

## Fig. 8 A

V

C.W

(degree/hour)

## Fig. 8 B

V

C.C.W

(degree/hour)

## Fig. 9

## Fig. 10

## Fig. 11

## Fig. 12

## Fig. 15

Fig. 13

# Fig. 14

(a)

$\oplus$

X

Y

sin wt

Z

LIGHT ADVANCE DIRECTION

(b)

X

Y

Z

(c)

X

Y

$\lambda/4$

Z

(d)

$\theta$

Y

$\theta+\lambda/4$

X

Z

(e) DETECTED SIGNAL

IorX

$\theta$ or Z

$K\sin\theta$

*Fig. 16*

*Fig. 17*

*Fig. 18*

Fig. 19

# Fig. 20

# Fig. 21

EP 0 107 373 B1

# Fig. 22

# Fig. 23

Fig. 24A

13030A°  ——— 100 A° ———  12930A°

Fig. 24B

13030A°  ——— 100 A° ———  12930A°

Fig. 25

## Fig. 26

## Fig. 27

## Fig. 28 PRIOR ART

(a)

(b)

# Fig.29A

# Fig.29 C

# Fig.29B